# EUROPEAN PATENT SPECIFICATION

(11) **EP 3 670 701 B1**
(45) Date of publication and mention of the grant of the patent: **14.09.2022**
(21) Application number: 19191080.1
(22) Date of filing: 09.08.2019
(51) Int. Cl.: C25B 1/23, C25B 11/031, C25B 11/052, C25B 11/055, C25B 11/089, C25D 3/56, C25D 7/00

(54) **METHOD FOR CONVERTING CARBON DIOXIDE (CO2) INTO CO BY AN ELECTROLYSIS REACTION**
VERFAHREN ZUR UMWANDLUNG VON KOHLENDIOXID (CO2) IN CO DURCH EINE ELEKTROLYSEREAKTION
PROCÉDÉ DE CONVERSION DE DIOXYDE DE CARBONE (CO2) EN CO PAR UNE RÉACTION D'ÉLECTROLYSE

(30) Priority: 19.12.2018 EP 18306750
(43) Date of publication of application: 24.06.2020
(73) Proprietor: Paris Sciences et Lettres, 75006 Paris (FR); College de France, 75005 Paris (FR)
(72) Inventor: FONTECAVE, Marc, 38330 SAINT ISMIER (FR); MOUGEL, Victor, 8046 ZURICH (CH); WAKERLEY, David, 64500 SAINT-JEAN-DE-LUZ (FR); LAMAISON, Sarah, 64500 SAINT JEAN-DE-LUZ (FR)
(74) Representative: Regimbeau

(56) References cited:
- WO-A1-2017/115462
- CN-A- 107 252 705
- CN-A- 109 137 058
- KR-A- 20160 010 070
- US-A1- 2012 088 372
- US-A1- 2019 009 341

## Description

### TECHNICAL FIELD

The present invention relates to an electrode comprising a metal deposit of zinc and silver, a process for preparing such an electrode, an electrolysis device comprising such an electrode and a method for CO₂ electroreduction to CO using such an electrode as a cathode.

### BACKGROUND

The formation of CO from CO₂ emissions and its subsequent conversion to high-added-value chemical feedstocks is a route to many carbon-cycle-closing *scenarii* [1]. CO represents the most facile intermediate to produce from CO₂ and can be transformed either at large scale by well-mastered thermochemical processes (Fischer-Tropsch reaction, Cativa process, phosgene synthesis, *etc.)* or at smaller scale for fine chemistry applications (hydroformylation, hydroxycarbonylation, *etc.*)*.* Currently however, CO production relies almost entirely on fossil-fuel-reforming processes; endothermic reactions that require little energy input but are entirely unsustainable.

The past decades have witnessed the emergence of renewably-powered electrochemical CO₂ reduction, which offers a sustainable and safer route to produce CO on-site with high flexibility at small to medium scales [2, 3]. To displace fossil-fuel-based processes, CO₂ electrolyzers must not only be cost-competitive but also produce industrially-relevant CO tonnage.

To satisfy this demand, different electrocatalysts have been proposed, among which heterogeneous surfaces stand out for their stability and ease of application. Original work by Hori highlighted three metal surfaces with remarkable CO₂-to-CO selectivity, Ag, Au and Zn [4, 5, 6]. Record activities are reported for Au and Ag, due to both their outstanding catalytic performance and amenability to nanostructuration [7, 8, 9, 10], which provides high electrochemically active surface areas (ECSAs). As such, these noble metals can satisfy the operational specifications for industrial application, but their implementation is rendered unrealistic by their high and fluctuating price and their limited overall availability, calling for the development of catalysts with low noble-metal content.

Zn is the only non-noble metal in the CO-generating class. However, in comparison to Au and Ag, few Zn-based catalysts have been reported [11, 12, 13, 14, 15].

The preparation of an alloy comprising silver and zinc is disclosed in the art in the context of the preparation of a conductive paste (WO2017/115462), the preparation of dendritic clusters (CN109137058), the formation of micro-pore or trench structures on the surface of a silicon wafer substrate (US2012/0088372), the preparation of a catalyst for electrochemically reducing carbon dioxide (CN107252705).

There thus exists a need for a more effective CO-generating system through CO₂ electroreduction technologies satisfying the following parameters:
- a selectivity for CO production, *i.e.* the typical concomitant formation of H₂ and formic acid must be minimized, so that the formed CO can be directly recoverable without substantial purification;
- the use of a catalytic material comprising mainly non-noble metals which are abundant and thus cost-effective.

### SUMMARY OF THE INVENTION

The present invention relates to an electrode comprising an electrically conductive support of which at least a part of the surface is covered by a metal deposit of zinc and silver,
wherein said metal deposit has a specific surface area greater than or equal to 0.1 m².g⁻¹, the specific surface area being determined by BET analysis, and wherein the electrode is obtainable by a process comprising the following successive steps:
   (i) providing an electrically conductive support;
   (ii) immersing said electrically conductive support at least partially in an acidic aqueous solution containing ions of zinc and ions of silver;
   (iii) applying a current or a potential between the electrically conductive support and a second electrode in order to form a metal deposit of zinc and silver on the electrically conductive support, so as to obtain a current density equal to or more negative than -0.1 A.cm⁻² between the electrically conductive support and a second electrode; and
   (iv) optionally removing the metal deposit of zinc and silver from the electrically conductive support and applying said removed metal deposit of zinc and silver on a second electrically conductive support,
as well as to an electrolysis device comprising such an electrode.

The present invention also relates to a process for preparing an electrode according to the invention comprising the following successive steps:
(i) providing an electrically conductive support;
(ii) immersing said electrically conductive support at least partially in an acidic aqueous solution containing ions of zinc and ions of silver; and
(iii) applying a current or a potential between the electrically conductive support and a second electrode, so as to have a current density equal to or more negative than -0.1 A.cm⁻², notably between -10 A.cm⁻² and -0.1 A.cm⁻², preferably between -5 A.cm⁻² and -0.1 A.cm⁻² between the electrically conductive support and the second electrode.
The application of a current or a potential in step (iii) allows the electrodeposition of zinc and silver on the electrically conductive support and thus, the formation of the metal deposit of zinc and silver. According to a particular embodiment, the metal deposit of zinc and silver is removed from the initial electrically conductive support and applied to a second electrically conductive support.

The present invention also relates to a method for converting carbon dioxide (CO₂) into CO using an electrode according to the present invention and comprising the following steps:
a) providing an electrolysis device comprising an anode and a cathode, wherein said cathode is an electrode according to the present invention and thus comprises an electrically conductive support of which at least a part of the surface is covered by a metal deposit of zinc and silver, said metal deposit having a specific surface area greater than or equal to 0.1 m².g⁻¹ and optionally comprising at least 1 wt% of one or several phases of an alloy of zinc and silver, such as a phase Ag_{0.13}Zn_{0.87};
b) exposing the cathode of said electrolysis device to a gaseous or liquid CO₂-containing composition, such as a CO₂-containing aqueous catholyte solution or a gaseous CO₂-containing composition;
c) applying an electrical current or a potential between the anode and the cathode in order to electrocatalytically reduce the carbon dioxide into CO.

The use of a cathode according to the invention comprising, as catalytic material, a metal deposit of zinc and silver (also called herein Ag-doped Zn electrode) allows CO₂ electroreduction into CO. Said cathode proved to be highly active and CO selective, leading to a gaseous product containing at least 70%, notably at least 75%, such as at least 80%, in particular at least 85%, preferably at least 90% of CO. In particular, the cathode according to the invention can lead to CO₂-to-CO selectivity as high as 96.5%, which could be sustained on average above 90% over 40 h and above 85% over 100 h of operation.

Partial CO catalytic current density at a given overpotential increases with Ag content, but levels off at -21.0 mA.cm⁻² due to CO₂-mass-transport limitations ensuing from low CO₂ solubility at 1 bar of CO₂. An increase of the CO₂ pressure to enhance the aqueous CO₂ concentration allowed this issue to be overcome and CO partial current densities as high as -286 mA cm⁻² were achieved.

### DEFINITIONS

By "electrode" is meant, in the sense of the present invention, an electronic conductor capable of capturing or releasing electrons. An oxidation reaction occurs at the anode, whereas a reduction reaction occurs at the cathode.

By "metal deposit" is meant a material obtained by the deposition, more particularly the electrodeposition, of metal(s) on a support (e.g. electrically conductive support). Said metal deposit can then be maintained on the support used for its deposition or can be removed and applied to another support.

By "gaseous or liquid CO₂-containing composition" is meant a liquid or gas composition, in particular a flow of liquid or gas composition, comprising CO₂ either dissolved in a liquid solution or as a gas. Any other reactant needed for the cathodic reaction may be present, such as a proton source, in particular, water in either liquid or vapor form, such as is described below.

By "electrolyte solution" is meant, in the present invention, a solution, preferably an aqueous solution, in which a substance is dissolved so that the solution becomes electrically conductive. This substance is named "electrolyte". A "catholyte solution" is an "electrolyte solution" used at the cathode. A "anolyte solution" is an "electrolyte solution" used at the anode.

For the purposes of the present invention, the term "electrolysis device", also called an "electrolyzer", is intended to mean a device for converting electrical energy, in particular renewable electrical energy, into chemical energy.

By "membrane electrode assembly electrolyzer" is meant an electrolysis device comprising an ion exchange membrane, such as a proton exchange, anion exchange or bipolar membrane or any type of ion exchange membrane, with conducting cathode and anode materials attached on either side. Ions generated by each half reaction at each electrode flow from anode to cathode directly across the membrane and thus an aqueous electrolyte is not required for electronic conductivity in this configuration. Instead, a gaseous CO₂-containing composition can be used as substrate at the cathode whereas a source of electron in either liquid or gaseous form, such as water, can be utilized as a substrate at the anode.

By "gas-diffusion-electrode-based-electrolyzer" is meant an electrolyzer comprising a gas-diffusion electrode as the cathode, said gas-diffusion electrode being in contact with a catholyte solution on one side and with a gas (e.g. gaseous CO₂) on the opposite side, the gas being able to flow through the gas-diffusion electrode to reach the cathode/catholyte solution interface. By "gas diffusion electrode" is meant an electrode made of a porous electronic conductor (e.g. a gas diffusion layer (GDL)), in particular a hydrophobic carbon-based material to which the metal deposit according to the invention is applied, through which gas (e.g. gaseous CO₂) may flow.

For the purposes of the present invention, the term "electrically conductive support" means a support capable of conducting electricity.

Within the meaning of the invention, "immersed" in a solution/fluid means that the electrode is plunged into the solution/fluid at least partially.

By "phase of an alloy of zinc and silver" is meant a homogeneous phase comprising zinc and silver. The alloy phase can have for example the following composition: Ag_{0.13}Zn_{0.87}. The presence of one or several phases of an alloy of zinc and silver and its/their amount can be determined by X-ray diffraction.

By "homogeneous phase" is meant a phase for which the composition is substantially the same in any point of the phase.

By "specific surface area" of the metal deposit is meant the specific surface area of the metal deposit determined by physisorption techniques and further BET analysis. More particularly, the specific surface area can be determined by BET analysis based on Kr-adsorption isotherms measured for instance on a BelSorp Max set-up at 77 K.

By "(C₁-C₆) alkyl" is meant a straight or branched saturated hydrocarbon chain containing from 1 to 6 carbon atoms including, but not limited to, methyl, ethyl, n-propyl, iso-propyl, n-butyl, iso-butyl, sec-butyl, t-butyl, n-pentyl, n-hexyl, and the like, preferably methyl or ethyl.

### DETAILED DESCRIPTION

### Electrode

An electrode according to the present invention comprises an electrically conductive support of which at least a part of the surface is covered by a metal deposit of zinc and silver,
wherein said metal deposit has a specific surface area greater than or equal to 0.1 m².g⁻¹, and optionally comprises at least 1 wt% of one or several phases of an alloy of zinc and silver, such as a phase Ag_{0.13}Zn_{0.87}.

The electrically conductive support can be the support used for forming the metal deposit (e.g. by electrodeposition) or another support. According to a particular embodiment, the metals, i.e. zinc and silver, are deposited on the support by electrodeposition for forming the metal deposit.

The electrically conductive support will comprise or consist of an electrically conductive material which may be a composite material consisting of several distinct electroconductive materials.

The electrically conductive material may be chosen in particular from a metal such as copper, steel, aluminum, zinc, silver, gold, iron, nickel or titanium; a metal oxide such as fluorine-doped tin oxide (FTO), antimony-doped tin oxide (ATO) or indium-doped tin oxide (ITO); a metal sulfide such as copper indium gallium sulfide, cadmium sulfide or zinc sulfide; carbon in particular in the form of carbon felt, graphite, vitreous carbon, carbon nanofibers, carbon nanotubes, carbon black, boron-doped diamond, any form of gas diffusion layer (GDL) with or without microporous layer and with or without hydrophobic treatment, such as the addition of a polytetrafluoroethylene; a polymer intrinsically electrically conductive or made conductive by a coating with a film of conductive material (e.g. metal, semi-conductor or conductive polymer); a semiconductor such as silicon (e.g. amorphous silicon, crystalline silicon), lead halide perovskite or tin halide perovskite; and a mixture thereof.

In particular, the electrically conductive material may be chosen from a metal such as copper, silver, iron, steel, aluminum, zinc or titanium, for instance copper, steel, aluminum, zinc or titanium; a metal oxide such as fluorine-doped tin oxide (FTO), or indium-doped tin oxide (ITO); a metal sulfide such as cadmium sulfide or zinc sulfide; carbon in particular in the form of carbon felt, graphite, vitreous carbon, boron-doped diamond; a semiconductor such as silicon; and a mixture thereof.

This support may take any form suitable for use as an electrode, the person skilled in the art being able to determine the shape and dimensions of such a support according to the intended use. For example, it can be in the form of a sheet, a foil, a plate, a mesh, or a foam. It can be 3D-printed, in particular in the case of a carbon-based or metal-based or polymer-based support.

The surface of such a support is at least partially covered by the metal deposit. Advantageously, at least 5%, in particular at least 20%, especially at least 50%, preferably at least 80%, of the surface of the support is covered by the metal deposit. According to a particular embodiment, the entire surface of the support is covered by the metal deposit.

The metal deposit has a specific surface area of at least 0.1 m².g⁻¹, notably at least 0.5 m².g⁻¹, for example at least 0.7 m².g⁻¹, such as at least 1 m².g⁻¹. In particular, the metal deposit has a specific surface area for example comprised between 0.1 and 500 m².g⁻¹, notably between 0.5 and 200 m².g⁻¹, in particular between 1 and 100 m².g⁻¹, preferably between 1 and 50 m².g⁻¹, for example between 1 and 30 m².g⁻¹, notably between 1 and 25 m².g⁻¹.

The metal deposit can comprise at least 1 wt%, notably at least 5 wt%, in particular at least 10 wt%, for example at least 20 wt%, such as at least 30 wt% of one or several phases of an alloy of zinc and silver. The metal deposit can consist of 100 wt% of one or several phases of an alloy of zinc and of the silver. The alloy of zinc and silver can be in particular an alloy of the following composition: Ag_{0.13}Zn_{0.87}. Thus, the metal deposit can consist of 100% Ag_{0.13}Zn_{0.87} or a mixture of Ag_{0.13}Zn_{0.87} and Zn, in particular with an alloy amount as defined above.
The presence of one or several phases of an alloy of zinc and silver and its/their amount can be determined by X-ray diffraction.

The metal deposit advantageously has a thickness of between 1 µm and 500 µm, for example between 1 µm and 300µm, such as between 1 µm and 250 µm, notably between 5 µm and 250 µm, preferably between 5 µm and 200 µm.
Such a thickness can be measured in particular by measuring a sample cross section by Scanning Electron Microscopy (SEM), for example using a scanning electron microscope Hitachi S-4800.

The metal deposit will also advantageously have a porous structure.
The metal deposit will advantageously have a porosity with an average pore size of between 1 µm and 500 µm, in particular between 1 µm and 200 µm, notably between 5 µm and 100 µm, preferably between 20 µm and 100 µm.
The average pore size can be determined by means of images obtained by Scanning Electron Microscopy (SEM) or Scanning Tunneling Microscopy (STM), preferably by Scanning Electron Microscopy (SEM), for example using a scanning electron microscope Hitachi S-4800.

The electrode can also have been submitted to one or several additional treatments, at any stage of its preparation, in particular to modify its conductivity (e.g. treatment with carbon-based materials such as carbon nanofibers, carbon nanotubes, carbon black, graphite, boron-doped diamond powder or a combination thereof), its hydrophobicity (e.g. treatment with polytetrafluoroethylene (PTFE)) and/or its ionophilicity (e.g. treatment with an ionomer such as an anion exchange polymer (e.g. Sustainion^{™}), a polyaromatic polymer (e.g. Fumion^{™}), polybenzimidazole (PBI) or a mixture thereof).

Such an electrode is obtainable by the method detailed below and can be used for CO₂ electroreduction to CO as mentioned below.

### Preparation of the electrode

The present invention relates also to a process for preparing an electrode according to the invention comprising the following successive steps:
(i) providing an electrically conductive support;
(ii) immersing said electrically conductive support at least partially in an acidic aqueous solution containing ions of zinc and ions of silver; and
(iii) applying a current or a potential between the electrically conductive support and a second electrode, so as to have a current density equal to or less than -0.1 A.cm⁻², notably between -10 A.cm⁻² and -0.1 A.cm⁻², preferably between -5 A.cm⁻² and -0.1 A.cm⁻² between the electrically conductive support and a second electrode.

### • Step (i)

The electrically conductive support can be the electrically conductive support present in the final electrode or another one.

The electrically conductive support will comprise or consist of an electrically conductive material which may be a composite material consisting of several distinct electroconductive materials.

The electrically conductive material may be chosen in particular from a metal such as copper, steel, aluminum, zinc, silver, gold, iron, nickel or titanium; a metal oxide such as fluorine-doped tin oxide (FTO), antimony-doped tin oxide (ATO) or indium-doped tin oxide (ITO); a metal sulfide such as copper indium gallium sulfide, cadmium sulfide or zinc sulfide; carbon in particular in the form of carbon felt, graphite, vitreous carbon, carbon nanofibers, carbon nanotubes, carbon black, boron-doped diamond, any form of gas diffusion layer (GDL) with or without microporous layer and with or without hydrophobic treatment, such as the addition of a polytetrafluoroethylene; a polymer intrinsically electrically conductive or made conductive by a coating with a film of conductive material (e.g. metal, semi-conductor or conductive polymer); a semiconductor such as silicon (e.g. amorphous silicon, crystalline silicon), lead halide perovskite or tin halide perovskite; and a mixture thereof.

In particular, the electrically conductive material may be chosen from a metal such as copper, silver, iron, steel, aluminum, zinc or titanium, for instance copper, steel, aluminum, zinc or titanium; a metal oxide such as fluorine-doped tin oxide (FTO), or indium-doped tin oxide (ITO); a metal sulfide such as cadmium sulfide or zinc sulfide; carbon in particular in the form of carbon felt, graphite, vitreous carbon, boron-doped diamond; a semiconductor such as silicon; and a mixture thereof.

This support may take any form suitable for use as an electrode, the person skilled in the art being able to determine the shape and dimensions of such a support according to the intended use. For example, it can be in the form of a sheet, a foil, a plate, a mesh, or a foam. It can be 3D-printed, in particular in the case of a carbon-based or metal-based or polymer-based support.

The support can also have been submitted to one or several additional treatments, in particular to modify the conductivity (e.g. treatment with carbon-based materials such as carbon nanofibers, carbon nanotubes, carbon black, graphite, boron-doped diamond powder or a combination thereof), hydrophobicity (e.g. treatment with PTFE) and/or ionophilicity (e.g. treatment with an ionomer such as an anion exchange polymer (e.g. Sustainion^{™}), a polyaromatic polymer (e.g. Fumion^{™}), PBI or a mixture thereof) of the electrode.

This electrically conductive support will advantageously be cleaned and polished before steps (ii) and (iii) are carried out according techniques well known to the skilled person.

### • Step (ii)

The acidic aqueous solution containing ions of zinc and ions of silver to be deposited will more particularly be an acidic aqueous solution containing:
- a salt of zinc such as ZnSO₄, ZnCl₂, Zn(ClO₄)₂, Zn(NO₃)₂, ZnBr₂, or Zn₃(PO₄)₂; an oxidised zinc species such as ZnO; a Zn(OH)₃⁻ -based salt; a Zn(OH)₄²⁻-based salt; a ZnO₂²⁻-based salt; or a mixture thereof; in particular it can be ZnSO₄;
- a salt of silver such as AgCl, AgNO₃, AgClO₃, Ag₂CO₃, Ag₃PO₄, AgClO₄, Ag₂SO₄, AgF, AgNO₂; an oxidised species of silver such as Ag₂O, AgOH; or a mixture thereof; in particular it can be AgNO₃.

The total metal ions (i.e. zinc and silver ions) will be present in the solution advantageously at a concentration comprised between 0.1 mM and 10 M, notably comprised between 1 mM and 1 M, such as comprised between 0.05 M and 0.5 M, notably at about 0.2 M.

The ratio zinc ions/silver ions in the acidic solution will depend on the ratio zinc/silver which is desired in the final electrode. At a current density of -4 A.cm⁻² applied in step (iii), the ratio between molar Ag content over the total amount of molar Ag and Zn in the final metal deposit is typically 2 times higher than the ratio between precursor Ag⁺ concentration over the total metal concentration of Ag⁺ and Zn²⁺ in the acidic solution.

The acid introduced into the aqueous solution may be any acid, whether organic or inorganic. It may be for example sulphuric acid, hydrochloric acid, hydrobromic acid, formic acid or acetic acid, notably sulphuric acid. Preferably, it will not be nitric acid. This acid may be present in the acidic aqueous solution advantageously at a concentration comprised between 0.1 mM and 10 M, notably comprised between 10 mM and 3 M, such as between 0.1 M and 3 M, notably between 0.1 M and 2 M, notably between 0.5 M and 2 M, in particular between 0.5 M and 1.5 M, for example at about 0.5 M or 1.5 M.

The acidic aqueous solution is advantageously prepared using deionized water to better control the ionic composition of the solution.

The electrically conductive support will be totally or partially immersed in the acidic aqueous solution containing the metal ions to be deposited depending on whether a deposit over the entire surface or only a part of the surface of the support is desired.

In order to obtain a deposit on only a part of the surface of the support, it may also be envisaged to apply a mask made of an insulating material on the parts of the support that should not be covered with the metal deposit. In this case, the complete support, on which the mask has been applied, may be immersed in the acidic aqueous solution containing the metal ions to be deposited. This mask will be removed from the support after the metal has been deposited.

### • Step (iii)

In this step, the electrically conductive support will act as cathode, while the second electrode will act as anode.

The second electrode will advantageously be immersed in the acidic aqueous solution containing the metal ions to be deposited but may also be immersed in another electrolyte solution electrically connected to the first one. The use of a single electrolyte solution, namely the acidic aqueous solution containing ions of zinc and ions of silver to be deposited, remains preferred.

The nature of the second electrode is not critical. It is only necessary for carrying out electrodeposition by an electrolysis process. It may be for example a platinum or titanium electrode or even a carbon electrode.

The current or potential is applied between the electrically conductive support and the second electrode (a reductive current / potential) so as to have a current density equal or less than -0.1 A.cm⁻², notably between -10 A.cm⁻² and -0.1 A.cm⁻², preferably between -5 A.cm⁻² and -0.1 A.cm⁻², preferably between -4 A.cm⁻² and -0.5 A.cm⁻².

The current or potential will be applied for a sufficient time to obtain the desired amount of metal deposit, notably for a duration comprised between 10 and 500 s, for example between 10 and 200 s, notably between 20 and 180 s, preferably between 30 and 160 s.

Electrodeposition will be carried out advantageously by a galvanostatic method, that is to say, by application of a constant current / potential throughout the deposition process.

When the current or potential is applied, several reduction reactions will occur at the cathode:
- on the one hand, the reduction of metal ions to metal in oxidation state 0 according to the following reaction with M representing Zn or Ag and x representing its initial oxidation state (2 for Zn and 1 for Ag):

   M^{x+} + xe⁻ → M
- and on the other, the reduction of protons to dihydrogen according to the following reaction:

   2H⁺ + 2e⁻ → H₂

Similarly, an oxidation reaction will occur at the anode when the current or potential is applied. The nature of this oxidation reaction is not crucial. This may be for example the oxidation of water.

The method according to the invention allows the growth of Zn-Ag with a high surface area through seeding and hydrogen-evolution-assisted electrodeposition. Thus, the metal deposit can be prepared by one step of electrodeposition.

Once the current or potential has been applied, the electrically conductive support of which at least one part of the surface is covered with a metal deposit may be removed from the solution in which it was immersed. It should be cleaned, notably with water (for example distilled water), before being dried, notably under vacuum, or under a stream of inert gas (argon, nitrogen, helium, etc.) or even air.

The electrode thus obtained can then be submitted to additional treatments, in particular to modify its conductivity (e.g. treatment with carbon-based materials such as carbon nanofibers, carbon nanotubes, carbon black, graphite, boron-doped diamond powder or a combination thereof), its hydrophobicity (e.g. treatment with PTFE) and/or its ionophilicity (e.g. treatment with an ionomer such an anion exchange polymer (e.g. Sustainion^{™}), a polyaromatic polymer (e.g. Fumion^{™}),PBI or a mixture thereof).

According to a first embodiment, the electrically conductive support of which at least one part of the surface is covered with a metal deposit can be used as such as an electrode according to the invention. In this case, the electrode according to the present invention can be prepared by one step of electrodeposition and optionally further additional treatment step(s) as mentioned above.

According to a second embodiment, the obtained metal deposit of zinc and silver is removed (e.g. by mechanically detaching it from the conductive support) from the initial electrically conductive support and applied on a second electrically conductive support to form the electrode according to the invention, such as a porous electrically conductive support. This can be performed by any deposition technique such as the application of an ink (e.g. by dropcasting or spraying) onto the electrically conductive support. Such an ink will be prepared by any technique well known to the person skilled in the field of electrochemistry and will advantageously comprise a volatile solvent such as ethanol, ethyl acetate, isopropanol or any other solvent, the powder obtained from the metal deposit removal and possibly an additional ionomer, such as a proton exchange membrane (e.g. Nafion^{™}), an anion exchange polymer (e.g. Sustainion^{™}), a polyaromatic polymer (e.g. Fumion^{™}),PBI or a mixture thereof, to ensure optimal attachment and electrical conductivity between the electrically conductive support and the applied metal deposit. This may also be performed by electrophoresis in a composition containing organic or aqueous electrolyte and a suspension of the metal deposit. In this case the electrically conductive support is used as the electrophoresis electrode to which the suspended particles of metal deposit are electrostatically attracted to. Additional treatment steps of the electrode can be performed before, during or after the application of the metal deposit on the support, in particular to modify its conductivity (e.g. treatment with carbon-based materials such as carbon nanofibers, carbon nanotubes, carbon black, graphite, boron-doped diamond powder or a combination thereof), its hydrophobicity (e.g. treatment with PTFE) and/or its ionophilicity (e.g. treatment with an ionomer such as an anion exchange polymer (e.g. Sustainion^{™}), a polyaromatic polymer (e.g. Fumion^{™}),PBI or a mixture thereof).

### Electrolysis device

The present invention relates also to an electrolysis device comprising an electrode according to the present invention, as defined above, which can be used for CO₂ electroreduction to CO.

Such an electrolysis device will include a second electrode. One electrode will act as anode where oxidation will occur, the other electrode will act as cathode where reduction will occur.

Advantageously, this device will use the electrode according to the present invention as the cathode, in particular to convert CO₂ into CO.

The anode may be any electrode traditionally used in the art as anode and with which the skilled person is well familiar. Such an anode will comprise an anodic catalyst which constitute the entire anode or which is applied on an electrically conductive support.

The anodic catalyst can be for example a metal such as copper, steel, iron, nickel, silver, gold, aluminium, platinum, cobalt, copper, iridium, ruthenium, nickel, titanium; a metal oxide such as iron oxide, iridium oxide, nickel oxide, copper oxide, cobalt oxide, fluorine-doped tin oxide (FTO), antimony-doped tin oxide (ATO) or indium-doped tin oxide (ITO); or a mixture thereof.

The support can comprise any suitable electrically conductive material, optionally in the form of a composite material consisting of several distinct electrically conductive materials, which may be selected notably from carbon, notably in the form of carbon felt, graphite, vitreous carbon, carbon nanofibers, carbon nanotubes, carbon black, boron-doped diamond, any form of gas diffusion layer (GDL) with or without microporous layer and with or without hydrophobic treatment such as the addition of a polytetrafluoroethylene; a polymer intrinsically electrically conductive or made conductive by their coating with a film of conductive material (e.g. metal, semi-conductor or conductive polymer); a semiconductor such as silicon or perovskite; and a mixture thereof.

The anode may take any form suitable for use as an electrode, the person skilled in the art being able to determine the shape and dimensions of such an electrode according to the intended use. For example, it can be in the form of a sheet, a foil, a plate, a mesh, or a foam. It can be 3D-printed, in particular in the case of a carbon-based or metal-based or polymer-based support.

The anode can also have been submitted to one or several additional treatments, at any stage of its preparation, in particular to modify its conductivity (e.g. treatment with carbon-based materials such as carbon nanofibers, carbon nanotubes, carbon black, graphite, boron-doped diamond powder or a combination thereof), its hydrophobicity (e.g. treatment with PTFE) and/or its ionophilicity (e.g. treatment with an ionomer such as an anion exchange polymer (e.g. Sustainion^{™}), a polyaromatic polymer (e.g. Fumion^{™}),PBI or a mixture thereof).

Such devices will include in particular other elements well known to the person skilled in the field of electrochemistry, such as one or more other electrodes (in particular a potential reference electrode), an energy source, a membrane, one or several ionomers, a supporting salt, a device allowing the flow of reagents, a device for collecting the gases formed, etc. However, the skilled person knows perfectly well how to make and implement such an electrochemical device.

In particular, the electrolysis device can be coupled to a source of electrical energy, such as an intermittent source of energy. It can be in particular a source of renewable electricity, more particularly an intermittent source of renewable energy, such as a photovoltaic panel or a wind turbine. However, any other source of electrical energy can be used.

### Method for converting CO₂ into CO

The method according to the present invention for converting carbon dioxide (CO₂) into CO uses an electrode according to the invention and comprises the following steps:
a) providing an electrolysis device comprising an anode and a cathode, wherein said cathode is an electrode according to the present invention and thus comprises an electrically conductive support of which at least a part of the surface is covered by a metal deposit of zinc and silver, said metal deposit having a specific surface area greater than or equal to 0.1 m².g⁻¹ and optionally comprising at least 1 wt% of one or several phases of an alloy of zinc and silver, such as a phase Ag_{0.13}Zn_{0.87};
b) exposing the cathode of said electrolysis device to a gaseous or liquid CO₂-containing composition, such as a CO₂-containing aqueous catholyte solution or a gaseous CO₂-containing composition;
c) applying an electrical current or a potential between the anode and the cathode in order to reduce the carbon dioxide into carbon monoxide.

### • Step (a)

The electrolysis device used in the method of the present invention comprises an anode and a cathode.

The cathode of the electrolysis device is an electrode according to the invention and comprises an electrically conductive support of which at least a part of the surface is covered by a metal deposit of zinc and silver, said metal deposit having a specific surface area greater than or equal to 0.1 m².g⁻¹ and optionally comprising at least 1 wt% of one or several phases of an alloy of zinc and silver, such as a phase Ag_{0.13}Zn_{0.87}-

The electrically conductive support can be the support used for forming the metal deposit (e.g. by electrodeposition) or another support. According to a particular embodiment, the metals, i.e. zinc and silver, are deposited on the support by electrodeposition for forming the metal deposit.

The electrically conductive support will comprise or consist of an electrically conductive material which may be a composite material consisting of several distinct electroconductive materials.

The electrically conductive material may be chosen in particular from a metal such as copper, steel, aluminum, zinc, silver, gold, iron, nickel or titanium; a metal oxide such as fluorine-doped tin oxide (FTO), antimony-doped tin oxide (ATO) or indium-doped tin oxide (ITO); a metal sulfide such as copper indium gallium sulfide, cadmium sulfide or zinc sulfide; carbon in particular in the form of carbon felt, graphite, vitreous carbon, carbon nanofibers, carbon nanotubes, carbon black, boron-doped diamond, any form of gas diffusion layer (GDL) with or without microporous layer and with or without hydrophobic treatment, such as the addition of a polytetrafluoroethylene; a polymer intrinsically electrically conductive or made conductive by a coating with a film of conductive material (e.g. metal, semi-conductor or conductive polymer); a semiconductor such as silicon (e.g. amorphous silicon, crystalline silicon), lead halide perovskite or tin halide perovskite; and a mixture thereof.

In particular, the electrically conductive material may be chosen from a metal such as copper, silver, iron, steel, aluminum, zinc or titanium, for instance copper, steel, aluminum, zinc or titanium; a metal oxide such as fluorine-doped Tin oxide (FTO), or indium-doped tin oxide (ITO); a metal sulfide such as cadmium sulfide or zinc sulfide; carbon in particular in the form of carbon felt, graphite, vitreous carbon, boron-doped diamond; a semiconductor such as silicon; and a mixture thereof.

This support may take any form suitable for use as an electrode, the person skilled in the art being able to determine the shape and dimensions of such a support according to the intended use. For example, it can be in the form of a sheet, a foil, a plate, a mesh, or a foam. It can be 3D-printed, in particular in the case of a carbon-based or metal-based or polymer-based support.

The surface of such a support is at least partially covered by the metal deposit. Advantageously, at least 5%, in particular at least 20%, especially at least 50%, preferably at least 80%, of the surface of the support is covered by the metal deposit. According to a particular embodiment, the entire surface of the support is covered by the metal deposit.

The metal deposit has a specific surface area of at least 0.1 m².g⁻¹, notably at least 0.5 m².g⁻¹, for example at least 0.7 m².g⁻¹, such as at least 1 m².g⁻¹. In particular, the metal deposit has a specific surface area for example comprised between 0.1 and 500 m².g⁻¹, notably between 0.5 and 200 m².g⁻¹, in particular between 1 and 100 m².g⁻¹, preferably between 1 and 50 m².g⁻¹, for example between 1 and 30 m².g⁻¹, notably between 1 and 25 m².g⁻¹.

The metal deposit can comprise at least 1 wt%, notably at least 5 wt%, in particular at least 10 wt%, for example at least 20 wt%, such as at least 30 wt% of one or several phases of an alloy of zinc and silver. The metal deposit can consist of 100 wt% of one or several phases of an alloy of zinc and of the silver. The alloy of zinc and silver can be in particular an alloy of the following composition: Ag_{0.13}Zn_{0.87}. Thus, the metal deposit can consist of 100% Ag_{0.13}Zn_{0.87} or a mixture of Ag_{0.13}Zn_{0.87} and Zn, in particular with an alloy amount as defined above.
The presence of one or several phases of an alloy of zinc and silver and its/their amount can be determined by X-ray diffraction.

The metal deposit advantageously has a thickness of between 1 µm and 500 µm, for example between 1 µm and 300 µm, such as between 1 µm and 250 µm, notably between 5 µm and 250 µm, preferably between 5 µm and 200 µm.
Such a thickness can be measured in particular by measuring the electrode cross section by Scanning Electron Microscopy (SEM), for example using a scanning electron microscope Hitachi S-4800.

The metal deposit will also advantageously have a porous structure.
The metal deposit will advantageously have a porosity with an average pore size of between 1 µm and 500 µm, in particular between 1 µm and 200 µm, notably between 5 µm and 100 µm, preferably between 20 µm and 100 µm.
The average pore size can be determined by means of images obtained by Scanning Electron Microscopy (SEM) or Scanning Tunneling Microscopy (STM), preferably by Scanning Electron Microscopy (SEM), for example using a scanning electron microscope Hitachi S-4800.

The cathode can also have been submitted to one or several additional treatments, at any stage of its preparation, in particular to modify its conductivity (e.g. treatment with carbon-based materials such as carbon nanofibers, carbon nanotubes, carbon black, graphite, boron-doped diamond powder or a combination thereof), its hydrophobicity (e.g. treatment with PTFE) and/or its ionophilicity (e.g. treatment with an ionomer such as an anion exchange polymer (e.g. Sustainion^{™}), a polyaromatic polymer (e.g. Fumion^{™}),PBI or a mixture thereof).

The anode may be any electrode traditionally used in the art as an anode and with which the skilled person is well familiar. Such an anode will comprise an anodic catalyst which constitute the entire anode or which is applied on an electrically conductive support.

The anodic catalyst can be for example a metal such as copper, steel, iron, nickel, silver, gold, aluminium, platinum, cobalt, copper, iridium, ruthenium, nickel, titanium; a metal oxide such as iron oxide, iridium oxide, nickel oxide, copper oxide, cobalt oxide, fluorine-doped tin oxide (FTO), antimony-doped tin oxide (ATO) or indium-doped tin oxide (ITO); or a mixture thereof.

The support can comprise any suitable electrically conductive material, optionally in the form of a composite material consisting of several distinct electrically conductive materials, which may be selected notably from carbon, notably in the form of carbon felt, graphite, vitreous carbon, carbon nanofibers, carbon nanotubes, carbon black, boron-doped diamond, any form of gas diffusion layer (GDL) with or without microporous layer and with or without hydrophobic treatment such as the addition of a polytetrafluoroethylene; a polymer intrinsically electrically conductive or made conductive by their coating with a film of conductive material (e.g. metal, semi-conductor or conductive polymer); a semiconductor such as silicon or perovskite; and a mixture thereof.

The anode may take any form suitable for use as an electrode, the person skilled in the art being able to determine the shape and dimensions of such an electrode according to the intended use. For example, it can be in the form of a sheet, a foil, a plate, a mesh, or a foam. It can be 3D-printed, in particular in the case of a carbon-based or metal-based or polymer-based support.

The anode can also have been submitted to one or several additional treatments, at any stage of its preparation, in particular to modify its conductivity (e.g. treatment with carbon-based materials such as carbon nanofibers, carbon nanotubes, carbon black, graphite, boron-doped diamond powder or a combination thereof), its hydrophobicity (e.g. treatment with PTFE) and/or its ionophilicity (e.g. treatment with an ionomer such as an anion exchange polymer (e.g. Sustainion^{™}), a polyaromatic polymer (e.g. Fumion^{™}), PBI or a mixture thereof).

The cathode and the electrolysis device can be as defined above (cf. 'electrode' and 'electrolysis device' parts above respectively). In particular, the cathode can be prepared as defined above (cf. 'preparation of the electrode' part).

### • Step (b)

The cathode of the electrolysis device will be exposed to a gaseous or liquid CO₂-containing composition such as a CO₂-containing aqueous catholyte solution or a CO₂-containing gas. This can be performed at atmospheric pressure or at a higher pressure, notably at a CO₂ pressure from 100 to 100000 kPa, notably from 100 to 50000 kPa, such as from 100 to 20000 kPa, for example from 100 to 10000 kPa, notably from 100 to 8000 kPa, such as from 100 to 6000 kPa, for example from 100 to 5000 kPa, for example from 100 to 1000 kPa. This can also be performed at a temperature which is preferably from 10 to 100 °C, notably from 20 to 100 °C, such as from 50 to 80 °C.

According to a first embodiment, the gaseous or liquid CO₂-containing composition is a CO₂-containing aqueous catholyte solution. In this case, the cathode will be more particularly immersed in such a catholyte solution. More particularly, the part of the cathode covered with the metal deposit must be at least partially, preferably completely, immersed into the catholyte solution.

Preferably, the aqueous solution is saturated with CO₂, notably by bubbling the CO₂ gas directly into the solution.

The use of a higher pressure of CO₂ allows the quantity of CO₂ dissolved in the catholyte to be increased and thus improved the electroreduction of CO₂ into CO.

Advantageously, the catholyte solution comprises a salt of hydrogen carbonate (HCO₃⁻), such as an alkali metal salt or a quaternary ammonium salt of hydrogen carbonate. The alkali metal can be potassium, sodium or cesium, preferably cesium. The quaternary ammonium can have the formula NR₁R₂R₃R₄⁺ wherein R₁, R₂, R₃ and R₄, identical or different, preferably identical, are a (C₁-C₆) alkyl, such as methyl or ethyl. The quaternary ammonium can be in particular a tetramethylammonium or a tetraethylammonium. Preferably the salt of hydrogen carbonate is CsHCO₃. It should be noted that the continuous CO₂ bubbling in the catholyte solution allows the consumed CO₂ to be regenerated.

The concentration of the salt of hydrogen carbonate advantageously is below 10 M, for example below 1 M, notably below 0.5 M. It can be comprised between 0.01 M and 0.5 M, notably between 0.05 M and 0.2 M. For example, it can be about 0.1 M.

The catholyte solution is advantageously prepared using deionized water to better control the ionic composition of the solution.

According to a second embodiment, the gaseous or liquid CO₂-containing composition is a CO₂-containing gas, notably in the form of a stream, such as gaseous CO₂, and more particularly a stream of gaseous CO₂. In this case, the electrolysis device will be more particularly a gas-diffusion-electrode-based electrolyzer. In consequence, the cathode will advantageously be made of a porous electrically conductive support at least partially covered with a metal deposit according to the invention, and preferably submitted to a hydrophobic treatment such as by the application of a polytetrafluoroethylene layer. The cathode separates the catholyte solution from the CO₂-containing gas, while allowing the flow of CO₂ through it. More particularly, the part of the cathode covered with the metal deposit must be at least partially, preferably completely exposed to the catholyte solution. It will be also exposed to CO₂ thanks to its diffusion through the porous structure of the cathode.

Preferably, the stream of gaseous CO₂ will be flowed at a flow rate (expressed per cm⁻² of electrode) from 0.1 mL.min⁻¹.cm⁻²_{electrode} to 500 mL.min⁻¹.cm⁻²_{electrode}, notably from 0.1 mL.min⁻¹.cm⁻²_{electrode} to 200 mL.min⁻¹.cm⁻²_{electrode}, such as from 0.2 mL.min⁻¹.cm⁻²_{electrode} to 100 mL.min⁻¹.cm⁻²_{electrode}, preferably from 0.5 mL.min⁻¹.cm⁻²_{electrode} to 50 mL.min⁻¹.cm⁻²_{electrode}. As mentioned above, a pressure of CO₂ higher than atmospheric pressure can be used to increase the CO₂ feed at the gas/cathode/catholyte interface.

Preferably, the catholyte solution will comprise an alkaline aqueous solution comprising a salt of hydroxide (OH⁻), such as an alkali metal salt of hydroxide. In particular the alkali metal can be potassium, sodium, lithium or cesium, preferably potassium or sodium. Alternatively, the catholyte solution may comprise a salt of hydrogen carbonate (HCO₃⁻), such as an alkali metal salt or a quaternary ammonium salt of hydrogen carbonate. The alkali metal can be potassium, sodium or cesium, preferably cesium. The quaternary ammonium can have the formula NR₁R₂R₃R₄⁺ wherein R₁, R₂, R₃ and R₄, identical or different, preferably identical, are a (C₁-C₆) alkyl, such as methyl or ethyl. The quaternary ammonium can be in particular a tetramethylammonium or a tetraethylammonium. Preferably the salt of hydrogen carbonate is CsHCO₃.

The concentration of the salt of hydroxide will advantageously be below 15 M, notably below 12 M, for example below 10 M. Preferably, it is not below 0.1 M, in particular not below 1 M. The concentration of the salt of hydrogen carbonate will be advantageously below 15 M, for example below 12 M, notably below 10 M, preferably not below 0.1 M, in particular not below 1 M.

The catholyte solution is advantageously prepared using deionized water to better control the ionic composition of the solution.

According to a third embodiment, the gaseous or liquid CO₂-containing composition is a CO₂-containing gas such as humidified CO₂ and more particularly a stream of humidified CO₂. In this case, the electrolysis device will be more particularly a membrane electrode assembly electrolyzer. In consequence, the cathode will be advantageously a porous electrode, for example comprising a gas-diffusion-layer, a metallic mesh- or a foam as an electrically conductive support, which is at least partially covered with the metal deposit according to the invention and optionally treated with an ionomer, such as an anion exchange polymer (e.g. Sustainion^{™}), a polyaromatic polymer (e.g. Fumion^{™}),PBI or a mixture thereof, to improve conductivity. More particularly, the part of the cathode covered with the metal deposit must be at least partially, preferably completely exposed to the stream of humidified CO₂.

Preferably, the stream of humidified CO₂ will be flowed at a flow rate (expressed per cm⁻² of electrode) from 0.1 mL.min⁻¹.cm⁻²_{electrode} to 500 mL.min⁻¹.cm⁻²_{electrode}, notably from 0.1 mL.min⁻¹.cm-²_{electrode} to 200 mL.min^{- 1}.cm⁻²_{electrode}, such as from 0.2 mL.min⁻¹.cm⁻²_{electrode} to 100 mL.min⁻¹.cm⁻²_{electrode}, preferably from 0.5 mL.min⁻¹.cm⁻²_{electrode} to 50 mL.min⁻¹.cm⁻²_{electrode}.

The use of a pressure of humidified CO₂ higher than atmospheric pressure will increase the CO₂ feed at the electrode/membrane interface. CO₂ pressure will be preferably from 100 to 100000 kPa, notably from 100 to 50000 kPa, such as from 100 to 20000 kPa, for example from 100 to 10000 kPa. The use of humidified CO₂ at higher temperature will also favor the homogeneous moisture of the electrode and avoid liquid accumulation at the cathode. The temperature will be preferably from 10 to 100 °C, notably from 20 to 100 °C, such as from 50 to 80 °C.

In the same way, the anode of the electrolysis device will be exposed to an anodic fluid that could be for example either under the liquid form (made of water for instance or an aqueous solution, preferably of non-expensive reactant(s) that can undergo oxidation as known by the skilled person in the field such as chloride anions) or in the gaseous form. The gaseous anodic fluid could be comprised of water vapor, or other non-expensive reactant(s) than can be oxidized such as methane. The fluid can be a stream or not.

Thus, the anode of the electrolysis device may be exposed to an anolyte solution (i.e. an anodic fluid in liquid form), such as an anolyte aqueous solution. More particularly, the anode will be immersed in this anolyte solution.

In this case, the anolyte aqueous solution can be an alkaline aqueous solution comprising a salt of hydroxide (OH⁻), such as an alkali metal salt of hydroxide. In particular the alkali metal can be potassium, sodium, lithium or cesium, preferably potassium or sodium.

The concentration of the salt of hydroxide will advantageously be below 15 M, notably below 12 M, for example below 10 M. Preferably, it is not below 0.1 M, in particular not below 1 M.

The anolyte aqueous solution can also be an acidic aqueous solution comprising a proton source, whether organic or inorganic. It may be for example sulphuric acid, hydrochloric acid, hydrobromic acid, formic acid, carbonic acid or acetic acid, notably sulphuric acid or carbonic acid. Preferably, it will not be nitric acid.

The concentration of the salt of hydroxide will advantageously be below 15 M, notably below 12 M, for example below 10 M. Preferably, it is not below 0.1 M, in particular not below 1 M.

The anolyte aqueous solution can also comprise a salt of carbonate (CO₃²⁻), such as an alkali metal salt of carbonate. The alkali metal can be potassium, sodium or cesium, preferably cesium. Preferably the salt of carbonate is Cs₂CO₃.

The concentration of the salt of carbonate advantageously is below 15 M, such as below 10 M, such as below 1 M, notably below 0.5 M. Preferably, it is not below 0.01 M, in particular not below 0.05 M. It can be comprised between 0.01 M and 0.5 M, notably between 0.05 M and 0.2 M. For example, it can be about 0.1 M.

The anolyte aqueous solution can also comprise a salt of hydrogen carbonate (HCO₃⁻), such as an alkali metal salt of hydrogen carbonate. The alkali metal can be potassium, sodium or cesium, preferably cesium. Preferably the salt of hydrogen carbonate is CsHCO₃. It should be noted that the continuous CO₂ bubbling in the catholyte solution allows regenerating the diffused bicarbonate anions.

The concentration of the salt of hydrogen carbonate advantageously is below 15 M, such as below 10 M, such as below 1 M, notably below 0.5 M. Preferably, it is not below 0.01 M, in particular not below 0.05 M. It can be comprised between 0.01 M and 0.5 M, notably between 0.05 M and 0.2 M. For example, it can be about 0.1 M.

The anolyte aqueous solution is advantageously prepared using deionized water to better control the ionic composition of the solution.

If a catholyte solution is also used, the catholyte solution and the anolyte solution may be the same solution so that the anode and the cathode are exposed to / immersed in the same solution. If the anode and cathode are not exposed to the same solution or if the cathode is not exposed to a solution, the cathode and anode chambers may be separated for example by an ion (e.g. proton) exchange, osmotic, bipolar or dialysis membrane or a porous ceramic in order to allow charges or solvent molecules to pass from one chamber to another.

An anolyte aqueous solution can be used in particular when a catholyte aqueous solution is also used or when the electrolysis device is a gas-diffusion-electrode-based electrolyzer.

The anode of the electrolysis device can also be exposed to an anodic fluid which is a gas and more particularly a gaseous stream. In particular, this gas can be water vapor; humidified carrier gas such as nitrogen or argon; non-expensive gaseous reactant that can be oxidized such as methane or a mixture thereof. Preferably, it will be made of humidified nitrogen.

In this case, the electrolysis device will be more particularly a membrane electrode assembly electrolyzer. Advantageously, the anode will be a porous electrode such as a gas-diffusion-layer-supported electrode, a metallic-mesh-supported or a foam-supported electrode. More particularly, the anode is at least partially, preferably completely exposed to the gaseous stream.

Preferably, the gaseous stream will be flowed at a flow rate (expressed per cm⁻² of electrode) from 0.1 mL.min⁻¹.cm⁻²_{electrode} to 500 mL.min⁻¹.cm⁻²_{electrode}, notably from 0.1 mL.min⁻¹.cm⁻²_{electrode} to 200 mL.min^{- 1}.cm⁻²_{electrode}, such as from 0.2 mL.min⁻¹.cm⁻²_{electrode} to 100 mL.min⁻¹.cm⁻²_{electrode}, preferably from 0.5 mL.min⁻¹.cm⁻²_{electrode} to 50 mL.min⁻¹.cm⁻²_{electrode}.

The gaseous stream pressure will be preferably from 100 to 100000 kPa, notably from 100 to 50000 kPa, such as from 100 to 20000 kPa, for example from 100 to 10000 kPa. Indeed, the use of a pressure of gaseous stream higher than atmospheric pressure will allow the water feed to be increased at the electrode/membrane interface of a membrane electrode assembly electrolyzer. The temperature will be preferably from 10 to 100 °C, notably from 20 to 100 °C, such as from 50 to 80 °C. Indeed, the use of a gaseous stream at higher temperature will also favor the homogeneous moisture of the electrode and avoid liquid accumulation at the anode.

### • Step (c)

When the electrical current or potential is applied between the anode and the cathode of the electrolysis device, reduction of carbon dioxide (CO₂) and optionally water (H₂O) occurs at the cathode and oxidation reaction(s) occur(s) at the anode.

The nature of the oxidation reaction(s) will depend notably on the nature of the anolyte fluid and of the anode. The reduction of carbon dioxide (CO₂) and water (H₂O) may occur according to the following half-reactions:
(1)

   *CO*₂ + *H*₂*O* + 2 *e⁻* → *CO* + 2 *OH⁻*
(2)

   *CO*₂ + *H*₂*O* + 2 *e⁻* → *HCOO⁻* + *OH⁻*
(3)

   2 *H*₂*O* + 2 *e⁻* → *H*₂ + 2 *OH⁻*

In the framework of the present invention, reduction occurs mainly according to half-reaction (1), leading to a high selectivity for CO production and a minor production of H₂ and formic acid (HCOOH). Thus, the gaseous product obtained by the CO₂ electroreduction according to the invention contains at least 70%, notably at least 75%, such as at least 80%, in particular at least 85%, preferably at least 90% of CO.

The current applied between the two electrodes will depend on the cell potential. This current will vary depending on the applied potential, pressure of carbon dioxide, electrode composition and device set up in each of the above embodiments. The potential applied between the cathode according to the present invention and a reversible hydrogen electrode (RHE) as reference electrode can be more negative than -0.5 V vs RHE, for example between -0.6 V vs RHE and -3 V vs RHE, notably between - 0.7 V vs RHE and -2 V vs RHE or even between -0.8 V vs RHE and -1.5 V vs RHE, or even between -0.8 V vs RHE and -1.4 V vs RHE.

The conditions of pressure and/or temperature can be as defined above for step (b).

### FIGURES

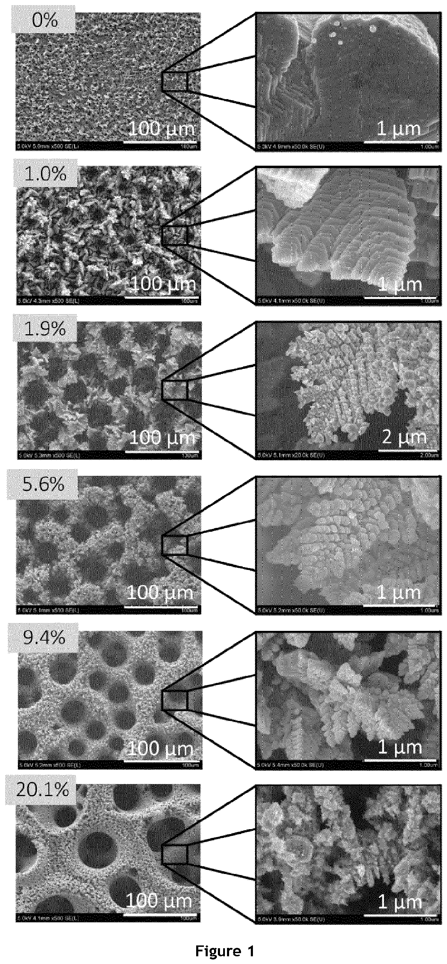

**Figure 1****:** SEM images of the Y%-Ag-doped Zn electrodes prepared with Y% being 0, 1.0, 1.9, 5.6, 9.4 or 20.1% at low (left column) and high (right column) magnifications.

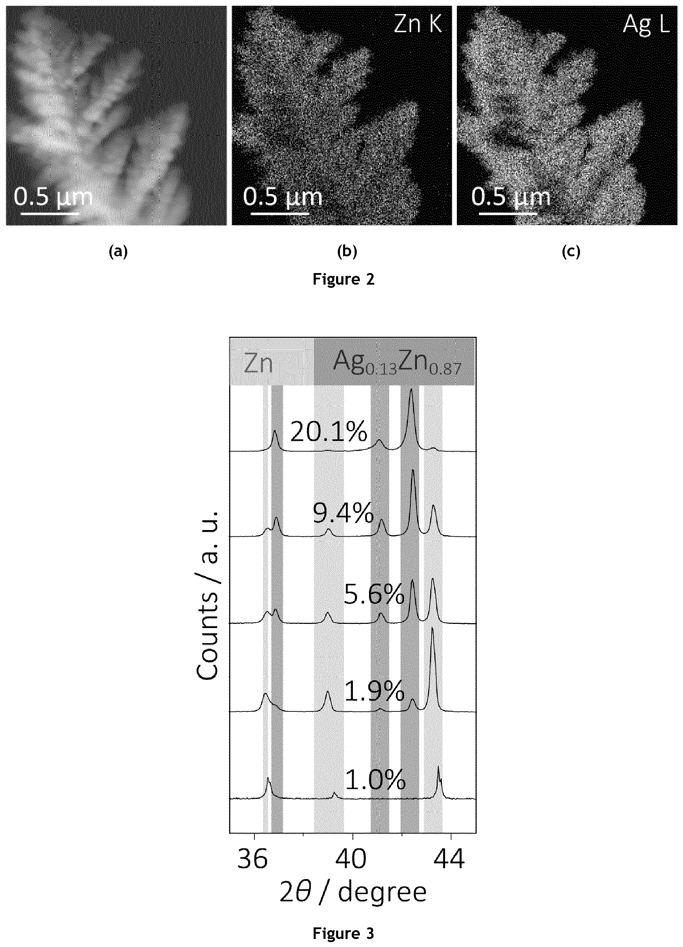

**Figure 2****:** From left to right: **(a)** STEM dark-field image and elemental XEDS maps of **(b)** Zn and **(c)** Ag based on their Zn-Kα and Ag-Lα signals of typical dendritic structures from a 5.6%-Ag-doped Zn electrode showing the homogeneous repartition of Ag and Zn at the nanoscale.
**Figure 3****:** Representative portion of the PXRD pattern of the Y%-Ag-doped Zn electrodes prepared with Y% being 1.0, 1.9, 5.6, 9.4 or 20.1%. The peaks assigned to pure Zn are highlighted in light grey. The peaks assigned to Ag_{0.13}Zn_{0.87} are highlighted in dark grey.

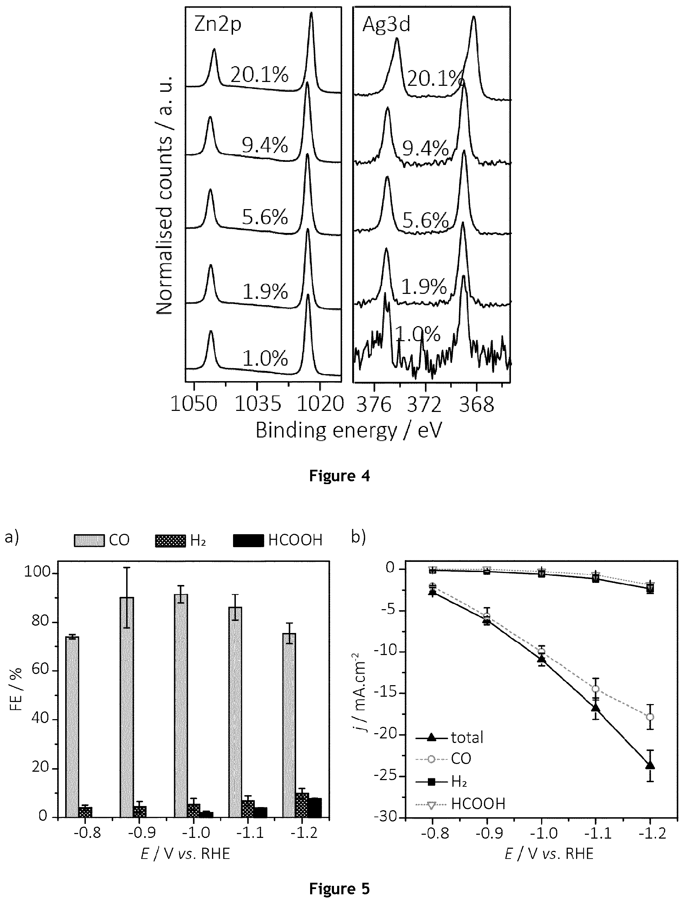

**Figure 4****:** XPS spectra of the Y%-Ag-doped Zn electrodes prepared with Y% being 1.0, 1.9, 5.6, 9.4 or 20.1% in the Ag 3*d* and Zn 2p regions.
**Figure 5:** (a) Faradaic efficiencies and (b) overall catalytic current density and partial current densities for CO, H₂ and HCOOH formation on the 1.9%-Ag-doped Zn electrode. All experiments were carried out in a two-compartment H-cell containing 0.1 M CsHCO₃ with a flow of CO₂ of 20 ml min⁻¹. Average values and error bars are calculated on at least three data points.

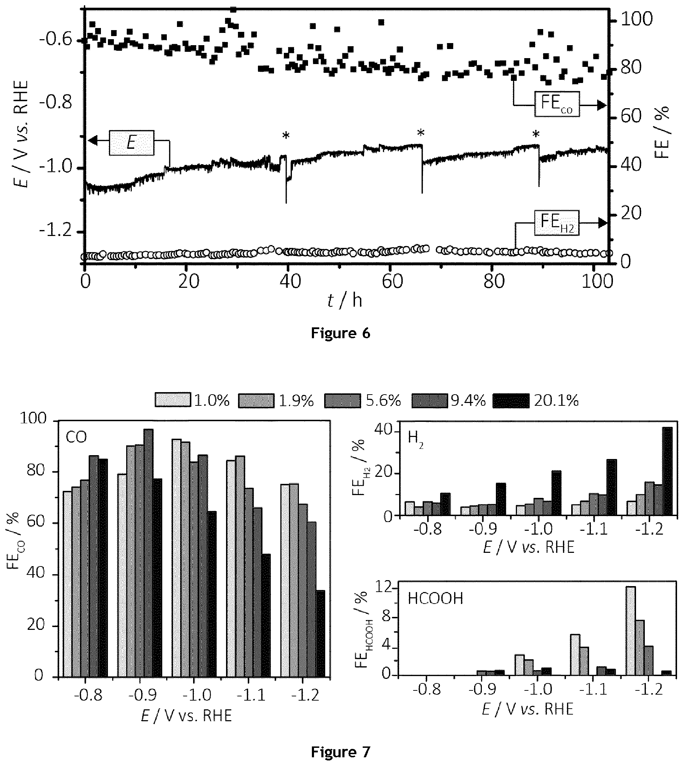

**Figure 6****:** Long-term electrolysis data for the 1.9%-Ag-doped Zn electrode while passing a controlled current density of -10 mA.cm⁻². The recorded potential (solid line) is indicated on the left axis whereas the faradaic efficiencies for CO (filled square symbols) and H₂ (hollow round symbols) are reported on the right axis. Stars indicate times at which the electrolyte was changed. All experiments were carried out in a two-compartment H-cell containing 0.1 M CsHCO₃ with a flow of CO₂ of 20 ml.min⁻¹.
**Figure 7****:** Faradaic efficiencies for CO, H₂ and HCOOH formation on 1.0 to 20.1%-Ag-doped Zn electrodes. All experiments were carried out in a two-compartment H-cell containing 0.1 M CsHCO₃ with a flow of CO₂ of 20 ml min⁻¹.

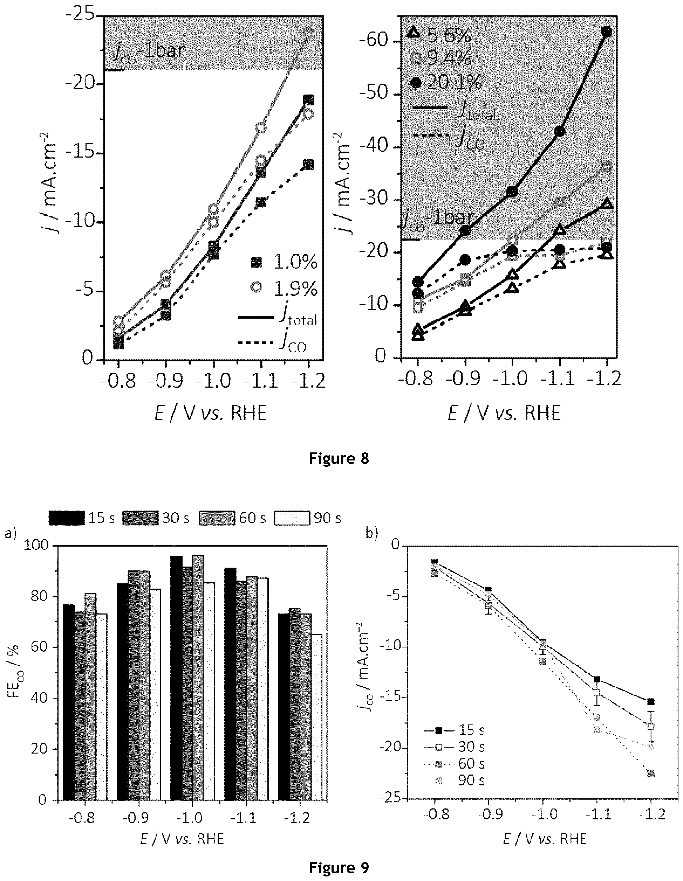

**Figure 8****:** Overall catalytic current densities (solid line) and partial current densities for CO formation (dashed line) on the Y%-Ag-doped Zn electrodes with increasing %Ag content (from 1.0% to 20.1%) and potential. All experiments were carried out in a two-compartment H-cell containing 0.1 M CsHCO₃ with a flow of CO₂ of 20 ml min⁻¹.
**Figure 9**: (a) Faradaic efficiencies for CO production using the 1.9%-Ag-doped Zn electrode deposited for increasing deposition durations and **(b)** the corresponding partial current densities. The jco-1 bar threshold (at around -21 mA.cm⁻²) indicates the limit of partial current density for CO formation (*j*_{CO}) that cannot be overcome due to limited CO₂ dissolution in aqueous media at 1 bar. In all cases, electrolysis was carried out in 0.1 M CsHCO₃ at a CO₂ flow rate of 20 mL.min⁻¹.

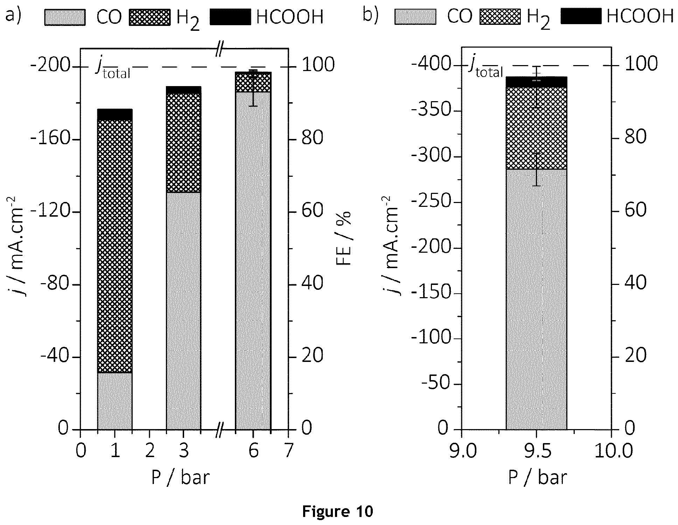

**Figure 10****:** Constant current electrolyses at **(a)** -200 mA.cm⁻² and **(b)** -400 mA.cm⁻² using a 9.4%-Ag-doped Zn electrode in a single-compartment reaction vessel in 0.1 M CsHCO₃ at various CO₂ pressures. Current densities (left axis) and faradaic efficiencies (right axis) for CO, H₂ and HCOOH formation are reported. When displayed, error bars are based on the standard deviation of at least 3 individual experiments.

### EXAMPLES

### Electrode preparation

Unless stated otherwise, electrodes were prepared on 1 cm² Zn foil (GoodFellow, 99,99+%, 1 mm) successively polished by P1200, and P2400 emery paper followed by sonication in water before deposition. Each electrode was then immersed in a 1.5 M H₂SO₄ aqueous solution of 0.2 M metal salts apportioned between X% AgNO₃ and (100-X)% ZnSO₄ with X% varying between 0% and 10% depending on the targeted Ag content and exposed to -4 A.cm⁻² for 30 s (unless stated otherwise) using a three-electrode set-up with an Ag/AgCl (KCl sat.) reference and Pt counter. In each case the electrode was immediately rinsed with milliQ water and air-dried after deposition.

AgNO₃ (99.9999%) and H₂SO₄ (99.8%), were purchased from Sigma-Aldrich and used without further purification. ZnSO₄.7H₂O (99.5%) was purchased from Roth chemicals.

### Structure characterisation

Imaging and Energy dispersive X-Ray spectrometry (EDX) were performed on a SU-70 Hitachi FEGSEM fitted with an X-Max 50 mm² Oxford EDX spectrometer. The imaging setup was 5 kV in order to observe surface features. Setup for quantitative analysis and mapping was 15 kV. Standards used as a reference for this voltage were purchased at Geller microanalytical laboratory (Boston, MA). Volume analysed at this voltage is approximatively a sphere with diameter of -700 nm. This value was calculated with Single Scattering Monte Carlo Simulation. Transmission electron microscopy images and chemical maps were acquired with a Jeol 2100F microscope operated at 200 kV. Chemical maps were acquired in STEM mode with the same microscope, equipped with Jeol system for X-ray detection and cartography. The elemental composition of the metallic electrodes was probed with ICP-AES in a ThermoFisher iCAP 6000 device after gently scratching the deposited powders from their Zn-plate support with a plastic blade and subsequently dissolving the metallic structures in 20% HNO₃ (Sigma-Aldrich, 65%).

Surface areas were obtained from the analysis of Kr sorption isotherms measured on a BelSorp Max set-up at 77 K. Prior to the measurement, samples were treated under vacuum at 130° C during at least 7 h. Surface areas were estimated using the BET model (Kr cross-sectional area 0.210 nm²). The specific surface area value derived from BET measurement, reported in m².g⁻¹ was converted, for convenience, to a physical surface area in cm²_{phys}.cm⁻²_{geo} by multiplying it by the mass of deposited electrode onto the 1 cm² flat Zn support.

Powder X-ray diffraction (PXRD) measurements were performed in Bragg-Brentano geometry using a BRUKER D8 Advance diffractometer with Cu Kα radiation (λKa1=1.54056 Å, λKa2=1.54439 Å) and a Lynxeye XE detector.

The electrochemically active ('echem') surface area available per cm² of flat ('geo') electrode was determined using a double layer capacitance measurement technique. This capacitance is determined as the slope of the linear relationship between the widths of cyclic voltammograms obtained at a potential at which no faradaic phenomenon occurs and the scan rates used to perform the cyclic voltammogram. Such experiments were led in CO₂-saturated 0.1 M CsHCO₃ to which an 85%-iR-correction was applied, just after electrolysis in order to get the most realistic value of the *operando* electrochemically active surface area.

### Electrochemical performance testing

Electrocatalytic measurements were carried out using a BioLogic SP300 potentiostat. A H-type cell was used with the two compartments being separated by a bipolar exchange membrane (AMV Selemion^{™}, ACG Engineering) with an inter-electrode distance of 6 cm between the working and Pt counter and an Ag/AgCl reference (saturated KCl) placed at 0.5 cm from the working. 0.1 M CsHCO₃ (Sigma-Aldrich, 99.9%) aqueous solution was used as both anolyte and catholyte, the latter being CO₂-saturated preceding the experiment (CO₂, Linde, HiQ 5.2) until the catholyte pH reach 6.8. During the electrolysis, CO₂ was constantly bubbled at 20 mL.min⁻¹ through a frit at the bottom of the cathodic chamber and generated gaseous products and excess CO₂ were flowed to the gaseous inlet of a gas chromatograph for online measurement. Potentials are reported against the Reversible Hydrogen Electrode (RHE) according to the relationship *E vs.* RHE = *E vs.* Ag/AgCl + 0.197+0.059*pH.

### Products characterisation

H₂ and gaseous CO₂ reduction products were analysed by gas chromatography (GC, Multi-Gas Analyser #5 SRI Instruments), equipped with HayeSep D and MolSieve 5A columns, thermal conductivity detector (TCD) and flame ionisation detector (FID) with methaniser using Argon as a carrier gas. GC was calibrated by using a standard gas mixture containing 2500 ppm of H₂, CO, CH₄, C₂H₄, C₂H₆, C₃H₆, C₃H₈, C₄H₈ and C₄H₁₀ in CO₂ (Messer). The liquid phase products were quantified using ionic exchange chromatography (for oxalate -883 Basic IC, Metrohm) and NMR spectroscopy (Bruker AVANCE III 300 spectrometer).

### Example 1: Preparation and characterization of a range of Ag-doped Zn electrodes

The general conditions mentioned above for electrode preparation were used to generate a range of Ag-doped Zn electrodes fabricated by varying the precursor Ag⁺ concentration. The so-generated Ag-Zn electrodes will be referred to, hereafter, as Y%-Ag-doped Zn electrodes where Y% is the incorporated atomic %Ag determined by ICP-AES (rounded to the decimal) taken equal to 1.0%, 1.9%, 5.6%, 9.4% or 20.1% (Table 1).

Scanning electron microscopy (SEM) revealed that even at the lowest %Ag (1.0%), high-surface-area microporous dendritic structures were attained, offering greatly improved structuration over the stacked configuration of pure Zn (Figure 1). As the %Ag was increased, both the density of the dendritic structure and electrode thickness increased further (Table 1), leading to high physical surface area (BET SA) as established by Kr-adsorption measurements and subsequent BET analysis (Table 1). Values ranged between 176 and 3133 cm²_{phys}.cm⁻²_{geo}, from 1.0% to 20.1%-Ag-doped Zn electrode, respectively outranging previously reported Zn-based catalysts surface areas[13] .

**Table 1. Complete characterisation of the Ag-doped Zn electrodes deposited with increasing %Ag**

| Precursor %[Ag⁺] [%] | Incorporated %Ag [%]^{a)} | BET specific surface area [m².g⁻¹]^{b)} | Deposited mass [mg.cm⁻²]^{c)} | BET SA [cm²_{phys}.cm⁻²_{geo}]^{d)} | ECSA [cm²_{echem}. cm⁻²_{geo}]^{e)} | Thickness [µm]^{f)} |
|---|---|---|---|---|---|---|
| 0.5 | 1.0 | NA | 10.4 | NA | 17.17 | 22 |
| 1 | 1.9 | 1.57 | 11.2 | 176 | 38.16 | 77 |
| 3 | 5.6 | 6.13 | 13 | 797 | 84.90 | 128 |
| 5 | 9.4 | 9.07 | 13.1 | 1188 | 121.7 | 126 |
| 10 | 20.1 | 22.7 | 13.8 | 3133 | 349.0 | 203 |

| | | | | | | |
|---|---|---|---|---|---|---|
| ^{a)} determined by Inductively coupled plasma - atomic emission spectroscopy (ICP-AES). ^{b)} specific surface area determined by Kr-adsorption measurements and BET analysis. ^{c)} determined by weighing the electrode before and after deposition. ^{d)} BET SA corresponds to the physical ('phys') surface area deposited per cm² of flat ('geo') electrode: it is calculated by multiplying the BET specific surface area by the mass of deposited electrode. ^{e)} electrochemically active ('echem') surface area available per cm² of flat ('geo') electrode determined by double layer capacitance measurements. ^{f)} thickness determined using 45° -tilted SEM of the electrode cross section. | | | | | | |

The alloyed nature of the Ag-doped Zn electrodes was proven by High Resolution-Transmission Electron Microscopy (HR-TEM) combined with Scanning TEM - Energy-Dispersive X-ray Spectroscopy (STEM-EDXS) elemental mapping, which showed a homogeneous distribution of Ag and Zn within the structures at the nanoscale (Figure 2).

Powder X-ray Diffraction (PXRD) on the powder recovered from the electrodes, revealed the presence of two sets of peaks that can be indexed in the hexagonal *P*6₃/*mmc* space group (Figure 3). The first set of peaks (marked with light grey domains) can be indexed with lattice parameters *a* = 2.67 Å and *c* = 4.92 Å and corresponds to pure Zn. The intensity of the second set of peaks (dark grey domains) increases at the expense of the Zn peaks when the incorporated %Ag increases, and can be indexed with *a* = 2.82 Å and *c* = 4.39 Å, corresponding to the Ag_{0.13}Zn_{0.87} phase [16, 17]. For a %Ag of 20.1%, only Ag_{0.13}Zn_{0.87} peaks are observed in the PXRD pattern.

The surface and near-surface composition (up to a depth of 526 nm) of each electrode was investigated by X-ray photoelectron spectroscopy (XPS) and 15 kV SEM-XEDS respectively (Figure 4). Both experiments revealed the presence of Ag and Zn, even at the lowest %Ag (1.0%), as well as low amounts of S from namuwite-like zinc-sulfate species after electrodeposition. Equivalent measurements after application of negative potentials in aqueous media proved the stability of such Ag-Zn alloyed structures while the namuwite phases were removed, as verified by the disappearance of their spectroscopic signals.

### Example 2: Electrocatalytic performance of the 1.9%-Ag-doped Zn electrode

Electrochemical studies were undertaken in a two-compartment H-cell separated by a bipolar membrane using 0.1 M CsHCO₃ as an electrolyte. The cathodic compartment was CO₂-saturated beforehand and CO₂ was continuously flowed at 20 mL.min⁻¹ throughout the electrolysis. Products were analysed by online gas chromatography (GC) and ¹H-NMR after each controlled potential electrolysis (CPE).

The potential-dependent activity of the 1.9%-Ag-doped Zn electrode was first investigated (Figure 5). Product analysis during CPE showed remarkable selectivity for CO evolution, particularly between -0.9 V and -1.1 V *vs.* RHE, where FE_{CO} was >90% and parasitic side-reactions were supressed (FE_{H2}<7% and FE_{HCOOH}<2.5%, Figure 5). The electrode was also remarkably robust, as an average FEco above 90% could be attained at a controlled current density of -10 mA.cm⁻² for 40 h of continuous operation (Figure 6). A slight decrease in selectivity was seen between 40 h and 100 h, resulting in an average FEco of 85%, with a FE_{HCOOH} of 5.3% and FE_{H2}<5% over the 100 h of operation.

### Example 3: Electrocatalytic performance of the Ag-doped Zn electrodes - influence of Ag content

Further electrochemical analyses were performed to establish the influence of Ag content on the corresponding Ag-doped Zn electrodes. Analysis of the product distribution showed that all electrodes generated CO as the major product (Figure 7) and the required overpotential to reach optimal FEco decreased with the %Ag: 1.0%- and 1.9%-Ag-doped Zn electrodes showed maximum FEco of respectively 93% and 91% at -1.0V *vs.* RHE; 5.6%- and 9.4%-Ag-doped Zn electrodes attained highest FEco of 90% and 97% at -0.9 V *vs.* RHE whereas the 20.1%-Ag-doped Zn electrode reached maximum FE_{CO} of 85% at -0.8 V *vs.* RHE.

Figure 8 shows the catalytic current density (*j*ₜₒₜₐₗ) increases with %Ag, which correlates with the enhancement of available physical surface area of the electrodes (Table 1). The corresponding partial current densities for CO formation (*j*_{CO}, dashed lines in Figure 8) comprised mostly of *j*ₜₒₜₐₗ and followed a similar trend at low overpotentials.

However, at high *j*ₜₒₜₐₗ (>-20 mA cm⁻²), discordance between *j*ₜₒₜₐₗ and *j*_{CO} was observed as *j*_{CO} plateaus at ~-21 mA cm⁻², while *j*ₜₒₜₐₗ continued to increase. This plateauing effect is particularly noticeable for Ag-Zn electrodes with the largest surface areas (namely 9.4%- and 20.1%- Ag-doped Zn electrodes), since high currents were attained at lower overpotentials. Upon reaching this jco plateau, FEco decayed in favour of a surge in FE_{H2}, as most clearly exemplified by the 20.1%-Ag-doped Zn electrode (Figure 7). Rather than an intrinsic limitation of the electrode, this is assigned to a CO₂-mass-transport limitation in aqueous solution due to its low solubility.

### Example 4: Electrocatalytic performance of Ag-doped Zn electrodes - influence of thickness

1.9%-Ag-doped Zn electrodes were prepared with varying thicknesses between 43 µm and 288 µm with otherwise identical nanostructures (confirmed by specific surface area analysis, Table 2).

**Table 2. Complete characterisation of the 1.9%-Ag-doped Zn electrodes deposited with increasing deposition time**

| Deposition time [s]^{a)} | BET specific surface area [m².g⁻¹]^{b)} | Deposited mass [mg.cm⁻²]^{c)} | BET SA [cm²_{phys}.cm⁻²_{geo}]^{d)} | ECSA [cm²_{echem}.cm⁻²_{geo}]^{e)} | Thickness [µm]^{f)} |
|---|---|---|---|---|---|
| 15 | NA | 6.2 | NA | 24.3 | 43 |
| 30 | 1.57 | 12.3 | 193 | 38.9 | 77 |
| 60 | 1.85 | 24.1 | 445 | 58.6 | 156 |
| 90 | 2.44 | 33.2 | 810 | 57.5 | 268 |

| | | | | | |
|---|---|---|---|---|---|
| ^{a)} deposition carried out at -4 A cm⁻². ^{b)} specific surface area determined by Kr-adsorption measurements and BET analysis. ^{c)} determined by weighing the electrode before and after deposition. ^{d)} BET SA corresponds to the physical ('phys') surface area deposited per cm² of flat ('geo') electrode: it is calculated by multiplying the BET specific surface area by the mass of deposited electrode. ^{e)} electrochemically active ('echem') surface area available per cm² of flat ('geo') electrode determined by double layer capacitance measurements. ^{f)} thickness determined using 45° -tilted SEM of the electrode cross section. | | | | | |

This was achieved by varying the electrode deposition time from 15 to 90 s in identical electrodeposition conditions. Analysis of their electrocatalytic activity revealed that little increase in *j*_{CO} was seen, indicating that electrodes above 43 µm-thick contain extra material that does not significantly add to the overall activity (Figure 9). On the other hand, the electrochemically-active surface area of the aforementioned electrodes continues to increase with thicknesses between 43 and 150 µm, suggesting electrolyte penetration is not the limit of catalytic activity (Table 2). The jco limitation can tentatively be assigned to the CO₂ mass transport, which does not exceed 43 µm within the electrode.

### Example 5: Electrocatalytic performance of Ag-doped Zn electrodes - influence of CO₂ pressure

The most restrictive parameter of CO₂ mass transport is its aqueous solubility posing a significant strain on the electrocatalytic performance of the Ag-doped Zn electrodes presented herein. This was confirmed by performing CO₂-electrocatalytic reduction at increased CO₂ pressure. The 9.4%-Ag-doped Zn electrode was chosen for this experiment, since it exhibited the 'jco-1 bar' plateau at a low overpotential. The experiment was carried out in a one-compartment high-pressure reactor with a graphite counter electrode in order to avoid the production of O₂, otherwise preferentially reduced on the cathode at the expense of CO₂-reduction efficiency. Three CO₂ pressures were tested (1, 3 and 6 bars) while passing a constant current density (*j*ₜₒₜₐₗ) of -200 mA.cm⁻². At 1 bar, the applied -200 mA.cm⁻² of current was mostly expended on H₂ evolution (Figure 10a FE_{H2} of 69%) as the quantity of dissolved CO₂ at 1 bar was limiting the rate of the CO₂ reduction reaction. As the amount of dissolved CO₂ increased (with increasing CO₂ pressures), *j*_{CO} values far beyond the -21 mA.cm⁻² plateau were achieved. At 3 bar and 6 bar, *j*_{CO} increased dramatically to -131 mA.cm⁻² and -188 mA.cm⁻², respectively, the latter corresponding to a FEco of 94%, which lies in the range of the intrinsic best performance recorded in the absence of CO₂ mass-transport limitation discussed previously. Given that the high-pressure cell required anode and cathode to operate in the same compartment, control experiments were used to confirm all CO was derived from CO₂ reduction. Analysis of the anodic graphite oxidation reaction in 0.1 M CsHCO₃ under Ar with a Pt cathode at a current density of -200 mA.cm⁻² showed that a small amount of CO₂ and a trace of CO were produced (FE_{CO}<1.6%), alongside large amounts of H₂ from the cathode. The anodic reaction was therefore predominantly oxidation of the graphite surface functionality, which may produce some CO₂ but very little CO. Further to this control, the dependency of jco on the CO₂ pressure and the observed 100% total FE were conclusive evidence of purely cathodic CO evolution. At higher set current densities and pressure (-400 mA.cm⁻²) showed in Figure 10b a *j*_{CO} as high as -297 mA.cm⁻² (*i.e.* an FEco of 86%) was achieved, which sets a new record for a predominantly Zn-based electrocatalyst.

### REFERENCES

[1] P. De Luna, C. Hahn, D. Higgins, S. A. Jaffer, T. F. Jaramillo, E. H. Sargent, Science 2019, 364, eaav3506.
[2] H. A. Hansen, J. B. Varley, A. A. Peterson, J. K. Nørskov, J. Phys. Chem. Lett. 2013, 4, 388-392.
[3] W. Zhang, Y. Hu, L. Ma, G. Zhu, Y. Wang, X. Xue, R. Chen, S. Yang, Z. Jin, Adv. Sci. 2018, 5, 1700275.
[4] Y. Hori, K. Kikuchi, S. Suzuki, Chem. Lett. 1985, 14, 1695-1698.
[5] S. R. Foit, I. C. Vinke, L. G. J. de Haart, R.-A. Eichel, Angew. Chemie Int. Ed. 2017, 56, 5402-5411.
[6] A. Bagger, W. Ju, A. S. Varela, P. Strasser, J. Rossmeisl, ChemPhysChem 2017, 18, 3266-3273.
[7] S. Ma, R. Luo, J. I. Gold, A. Z. Yu, B. Kim, P. J. A. Kenis, J. Mater. Chem. A 2016, 4, 8573-8578.
[8] E. J. Dufek, T. E. Lister, S. G. Stone, M. E. Mcllwain, J. Electrochem. Soc. 2012, 159, F514-F517.
[9] S. Verma, Y. Hamasaki, C. Kim, W. Huang, S. Lu, H.-R. M. Jhong, A. A. Gewirth, T. Fujigaya, N. Nakashima, P. J. A. Kenis, ACS Energy Lett. 2018, 3, 193-198.
[10] A. Dutta, C. E. Morstein, M. Rahaman, A. Cedeño Lopez, P. Broekmann, ACS Catal. 2018, 8, 8357-8368.
[11] D. L. T. Nguyen, M. S. Jee, D. H. Won, H. Jung, H.-S. Oh, B. K. Min, Y. J. Hwang, ACS Sustain. Chem. Eng. 2017, 5, 11377-11386.
[12] F. Quan, D. Zhong, H. Song, F. Jia, L. Zhang, J. Mater. Chem. A 2015, 3, 16409-16413.
[13] J. Rosen, G. S. Hutchings, Q. Lu, R. V Forest, A. Moore, F. Jiao, ACS Catal. 2015, 5, 4586-4591.
[14] D. H. Won, H. Shin, J. Koh, J. Chung, H. S. Lee, H. Kim, S. I. Woo, Angew. Chem. Int. Ed. Engl. 2016, 55, 9297-9300.
[15] K. P. Kuhl, T. Hatsukade, E. R. Cave, D. N. Abram, J. Kibsgaard, T. F. Jaramillo, J. Am. Chem. Soc. 2014, 136, 14107-14113.
[16] S. Lee, G. Park, J. Lee, ACS Catal. 2017, 7, 8594-8604.
[17] T. Burdyny, P. J. Graham, Y. Pang, C.-T. Dinh, M. Liu, E. H. Sargent, D. Sinton, ACS Sustain. Chem. Eng. 2017, 5, 4031-4040.

## Claims

1. An electrode comprising an electrically conductive support of which at least a part of the surface is covered by a metal deposit of zinc and silver,
wherein said metal deposit has a specific surface area greater than or equal to 0.1 m².g⁻¹, the specific surface area being determined by BET analysis, and
wherein the electrode is obtainable by a process comprising the following successive steps:
(i) providing an electrically conductive support;
(ii) immersing said electrically conductive support at least partially in an acidic aqueous solution containing ions of zinc and ions of silver;
(iii) applying a current or a potential between the electrically conductive support and a second electrode in order to form a metal deposit of zinc and silver on the electrically conductive support, so as to obtain a current density equal to or more negative than -0.1 A.cm⁻² between the electrically conductive support and a second electrode; and
(iv) optionally removing the metal deposit of zinc and silver from the electrically conductive support and applying said removed metal deposit of zinc and silver on a second electrically conductive support.

2. The electrode according to claim 1, wherein the electrically conductive support of the electrode comprises an electrically conductive material selected from a metal; a metal oxide; a metal sulfide; carbon; a polymer intrinsically electrically conductive or made conductive by a coating with a film of conductive material; a semiconductor; and a mixture thereof.

3. The electrode according to claim 2, wherein the carbon is in the form of carbon felt, graphite, vitreous carbon, carbon nanofibers, carbon nanotubes, carbon black, boron-doped diamond, any form of gas diffusion layer (GDL) with or without microporous layer.

4. The electrode according to any one of claims 1 to 3, wherein the metal deposit has a specific surface area between 0.1 and 500 m².g⁻¹.

5. The electrode according to any one of claims 1 to 4, wherein the metal deposit comprises at least 1 wt% of one or several phases of an alloy of zinc and silver, such as a phase Ag_{0.13}Zn_{0.87}.

6. The electrode according to any one of claims 1 to 5, wherein the metal deposit has a thickness comprised between 1 µm and 500 µm.

7. The electrode according to any one of claims 1 to 6, wherein the metal deposit has a porous structure with an average pore size of between 1 µm and 500 µm, the average pore size being determined by means of images obtained by Scanning Electron Microscopy (SEM).

8. A process for preparing an electrode according to any one of claims 1 to 7 comprising the following successive steps:
(i) providing an electrically conductive support;
(ii) immersing said electrically conductive support at least partially in an acidic aqueous solution containing ions of zinc and ions of silver;
(iii) applying a current or a potential between the electrically conductive support and a second electrode in order to form a metal deposit of zinc and silver on the electrically conductive support, so as to have a current density equal to or more negative than -0.1 A.cm⁻² between the electrically conductive support and a second electrode; and
(iv) optionally removing the metal deposit of zinc and silver from the electrically conductive support and applying said removed metal deposit of zinc and silver on a second electrically conductive support.

9. The electrode according to any one of claims 1 to 7 or the process according to claim 8, wherein the acidic aqueous solution containing ions of zinc and ions of silver is an acidic aqueous solution containing:
- ZnSO₄, ZnCl₂, Zn(ClO₄)₂, Zn(NO₃)₂, ZnBr₂, Zn₃(PO₄)₂, ZnO, a Zn(OH)₃⁻ -based salt, a Zn(OH)₄²⁻-based salt, a ZnO₂²⁻-based salt, or a mixture thereof; and
- AgCl, AgNO₃, AgClO₃, Ag₂CO₃, Ag₃PO₄, AgClO₄, Ag₂SO₄, AgF, AgNO₂, Ag₂O, AgOH, or a mixture thereof.

10. The electrode according to any one of claims 1 to 7 or 9 or the process according to claim 8 or 9, wherein the electrode is further submitted to a treatment to modify its conductivity, a treatment to modify its hydrophobicity, a treatment to modify its ionophilicity, or a combination thereof.

11. An electrolysis device comprising an electrode according to any one of claims 1 to 7 or claim 9 or 10.

12. The electrolysis device according to claim 11, coupled to a source of an electrical energy.

13. A method for converting carbon dioxide (CO₂) into CO comprising the following steps:
a) providing an electrolysis device comprising an anode and a cathode, wherein said cathode is an electrode according to any one of claims 1 to 7 or claim 9 or 10;
b) exposing the cathode of said electrolysis device to a gaseous or liquid CO₂-containing composition;
c) applying an electrical current or a potential between the anode and the cathode in order to reduce the carbon dioxide into CO.

14. The method according to claim 13, wherein the method is performed under a CO₂ pressure of from 100 to 100000 kPa.

15. The method according to claim 13 or 14, wherein the method is performed at a temperature from 10 to 100°C.

16. The method according to any one of claims 13 to 15, wherein the gaseous or liquid CO₂-containing composition is a CO₂-containing aqueous catholyte solution or a gaseous CO₂-containing composition.

## Patentansprüche

1. Elektrode, die einen elektrisch leitfähigen Träger umfasst, von dem mindestens ein Teil der Oberfläche mit einer Metallabscheidung aus Zink und Silber bedeckt ist,
wobei die Metallabscheidung eine spezifische Oberfläche von größer als oder gleich 0,1 m².g⁻¹ aufweist, wobei die spezifische Oberfläche mittels BET-Analyse bestimmt wird, und
wobei die Elektrode über einen Prozess erhältlich ist, welcher die folgenden aufeinanderfolgenden Schritte umfasst:
(i) Bereitstellen eines elektrisch leitfähigen Trägers;
(ii) Eintauchen des elektrisch leitfähigen Trägers mindestens teilweise in eine saure wässrige Lösung, die Zinkionen und Silberionen enthält;
(iii) Anlegen eines Stroms oder eines Potentials zwischen dem elektrisch leitfähigen Träger und einer zweiten Elektrode, um auf dem elektrisch leitfähigen Träger eine Metallabscheidung aus Zink und Silber zu bilden, so, dass zwischen dem elektrisch leitfähigen Träger und einer zweiten Elektrode eine Stromdichte von gleich oder negativer als -0,1 A.cm⁻² erhalten wird; und
(iv) gegebenenfalls Entfernen der Metallabscheidung aus Zink und Silber vom elektrisch leitfähigen Träger und Aufbringen der entfernten Metallabscheidung aus Zink und Silber auf einen zweiten elektrisch leitfähigen Träger.

2. Elektrode nach Anspruch 1, wobei der elektrisch leitfähige Träger der Elektrode ein elektrisch leitfähiges Material umfasst, ausgewählt aus einem Metall; einem Metalloxid; einem Metallsulfid; Kohlenstoff; einem Polymer, das intrinsisch elektrisch leitfähig ist oder durch eine Beschichtung mit einem Film aus leitfähigem Material leitfähig gemacht wurde; einem Halbleiter; und einer Mischung davon.

3. Elektrode nach Anspruch 2, wobei der Kohlenstoff in Form von Kohlenstofffilz, Graphit, glasartigem Kohlenstoff, Kohlenstoff-Nanofasern, Kohlenstoff-Nanoröhren, Ruß, Bor-dotiertem Diamant, einer beliebigen Form von Gasdiffusionsschicht (GDL) mit oder ohne mikroporöser Schicht vorliegt.

4. Elektrode nach einem der Ansprüche 1 bis 3, wobei die Metallabscheidung eine spezifische Oberfläche zwischen 0,1 und 500 m².g⁻¹ aufweist.

5. Elektrode nach einem der Ansprüche 1 bis 4, wobei die Metallabscheidung mindestens 1 Gew.-% einer oder mehrerer Phasen einer Legierung aus Zink und Silber, wie etwa einer Ag_{0,13}Zn_{0,87}-Phase, umfasst.

6. Elektrode nach einem der Ansprüche 1 bis 5, wobei die Metallabscheidung eine Dicke im Bereich zwischen 1 µm und 500 µm aufweist.

7. Elektrode nach einem der Ansprüche 1 bis 6, wobei die Metallabscheidung eine poröse Struktur mit einer durchschnittlichen Porengröße von zwischen 1 µm und 500 µm aufweist, wobei die durchschnittliche Porengröße mittels Bildern bestimmt wird, die durch Rasterelektronenmikroskopie (REM) erhalten werden.

8. Prozess zum Herstellen einer Elektrode nach einem der Ansprüche 1 bis 7, der die folgenden aufeinanderfolgenden Schritte umfasst:
(i) Bereitstellen eines elektrisch leitfähigen Trägers;
(ii) Eintauchen des elektrisch leitfähigen Trägers mindestens teilweise in eine saure wässrige Lösung, die Zinkionen und Silberionen enthält;
(iii) Anlegen eines Stroms oder eines Potentials zwischen dem elektrisch leitfähigen Träger und einer zweiten Elektrode, um auf dem elektrisch leitfähigen Träger eine Metallabscheidung aus Zink und Silber zu bilden, so, dass zwischen dem elektrisch leitfähigen Träger und einer zweiten Elektrode eine Stromdichte von gleich oder negativer als -0,1 A.cm⁻² vorliegt; und
(iv) gegebenenfalls Entfernen der Metallabscheidung aus Zink und Silber vom elektrisch leitfähigen Träger und Aufbringen der entfernten Metallabscheidung aus Zink und Silber auf einen zweiten elektrisch leitfähigen Träger.

9. Elektrode nach einem der Ansprüche 1 bis 7, oder Prozess nach Anspruch 8, wobei es sich bei der sauren wässrigen Lösung, die Zinkionen und Silberionen enthält, um eine saure wässrige Lösung handelt, welche enthält:
- ZnSO₄, ZnCl₂, Zn(ClO₄)₂, Zn(NO₃)₂, ZnBr₂, Zn₃(PO₄)₂, ZnO, ein Salz auf Basis von Zn(OH)₃⁻, ein Salz auf Basis von Zn(OH)₄²⁻, ein Salz auf Basis von ZnO₂²⁻, oder eine Mischung davon; und
- AgCl, AgNO₃, AgClO₃, Ag₂CO₃, Ag₃PO₄, AgClO₄, Ag₂SO₄, AgF, AgNO₂, Ag₂O, AgOH, oder eine Mischung davon.

10. Elektrode nach einem der Ansprüche 1 bis 7 oder 9, oder Prozess nach Anspruch 8 oder 9, wobei die Elektrode weiter einer Behandlung, um ihre Leitfähigkeit zu modifizieren, einer Behandlung, um ihre Hydrophobie zu modifizieren, einer Behandlung, um ihre Ionen-Philie zu modifizieren, oder einer Kombination davon unterzogen wird.

11. Elektrolysevorrichtung, die eine Elektrode nach einem der Ansprüche 1 bis 7 oder Anspruch 9 oder 10 umfasst.

12. Elektrolysevorrichtung nach Anspruch 11, die mit einer Quelle einer elektrischen Energie gekoppelt ist.

13. Verfahren zum Umwandeln von Kohlendioxid (CO₂) in CO, das die folgenden Schritte umfasst:
a) Bereitstellen einer Elektrolysevorrichtung, die eine Anode und eine Kathode umfasst, wobei es sich bei der Kathode um eine Elektrode nach einem der Ansprüche 1 bis 7 oder Anspruch 9 oder 10 handelt;
b) Aussetzen der Kathode der Elektrolysevorrichtung einer gasförmigen oder flüssigen CO₂-haltigen Zusammensetzung,
c) Anlegen eines elektrischen Stroms oder eines Potentials zwischen der Anode und der Kathode, um das Kohlendioxid zu CO zu reduzieren.

14. Verfahren nach Anspruch 13, wobei das Verfahren unter einem CO₂-Druck von 100 bis 100.000 kPa durchgeführt wird.

15. Verfahren nach Anspruch 13 oder 14, wobei das Verfahren bei einer Temperatur von 10 bis 100 °C durchgeführt wird.

16. Verfahren nach einem der Ansprüche 13 bis 15, wobei es sich bei der gasförmigen oder flüssigen CO₂-haltigen Zusammensetzung um eine CO₂-haltige wässrige Katholytlösung oder eine gasförmige CO₂-haltige Zusammensetzung handelt.

## Revendications

1. Électrode comprenant un support électroconducteur dont au moins une partie de la surface est recouverte d'un dépôt métallique de zinc et d'argent,
dans laquelle ledit dépôt métallique présente une surface spécifique supérieure ou égale à 0,1 m².g⁻¹, la surface spécifique étant déterminée par une analyse BET, et
dans laquelle l'électrode est susceptible d'être obtenue par un procédé comprenant les étapes successives suivantes :
(i) la fourniture d'un support électroconducteur ;
(ii) l'immersion dudit support électroconducteur au moins partiellement dans une solution aqueuse acide contenant des ions de zinc et des ions d'argent ;
(iii) l'application d'un courant ou d'un potentiel entre le support électroconducteur et une seconde électrode afin de former un dépôt métallique de zinc et d'argent sur le support électroconducteur, de manière à avoir une densité de courant inférieure ou égale à -0,1 A.cm⁻² entre le support électroconducteur et une seconde électrode ; et
(iv) facultativement le retrait du dépôt métallique de zinc et d'argent à partir du support électroconducteur et l'application dudit dépôt métallique de zinc et d'argent retiré sur un second support électroconducteur.

2. Électrode selon la revendication 1, dans laquelle le support électroconducteur de l'électrode comprend un matériau électroconducteur sélectionné parmi un métal ;
un oxyde métallique ; un sulfure métallique ; un carbone ; un polymère intrinsèquement électroconducteur ou rendu conducteur par un revêtement d'un film de matériau conducteur ; un semi-conducteur ; et un mélange de ceux-ci.

3. Électrode selon la revendication 2, dans laquelle le carbone est sous la forme de feutre de carbone, de graphite, de carbone vitreux, de nanofibres de carbone, de nanotubes de carbone, de noir de carbone, de diamant dopé au bore, de toute forme de couche de diffusion de gaz (GDL) avec ou sans couche microporeuse.

4. Électrode selon l'une quelconque des revendications 1 à 3, dans laquelle le dépôt métallique présente une surface spécifique entre 0,1 et 500 m².g⁻¹.

5. Électrode selon l'une quelconque des revendications 1 à 4, dans laquelle le dépôt métallique comprend au moins 1 % en poids d'une ou de plusieurs phases d'un alliage de zinc et d'argent, telle qu'une phase Ag_{0,13}Zn_{0,87}.

6. Électrode selon l'une quelconque des revendications 1 à 5, dans laquelle le dépôt métallique présente une épaisseur comprise entre 1 µm et 500 µm.

7. Électrode selon l'une quelconque des revendications 1 à 6, dans laquelle le dépôt métallique présente une structure poreuse avec une taille moyenne de pores entre 1 µm et 500 µm, la taille moyenne de pores étant déterminée au moyen d'images obtenues par microscopie électronique à balayage (MEB).

8. Procédé de préparation d'une électrode selon l'une quelconque des revendications 1 à 7 comprenant les étapes successives suivantes :
(i) la fourniture d'un support électroconducteur ;
(ii) l'immersion dudit support électroconducteur au moins partiellement dans une solution aqueuse acide contenant des ions de zinc et des ions d'argent ;
(iii) l'application d'un courant ou d'un potentiel entre le support électroconducteur et une seconde électrode afin de former un dépôt métallique de zinc et d'argent sur le support électroconducteur, de manière à avoir une densité de courant inférieure ou égale à -0,1 A.cm⁻² entre le support électroconducteur et une seconde électrode ; et
(iv) facultativement le retrait du dépôt métallique de zinc et d'argent à partir du support électroconducteur et l'application dudit dépôt métallique de zinc et d'argent retiré sur un second support électroconducteur.

9. Électrode selon l'une quelconque des revendications 1 à 7 ou procédé selon la revendication 8, dans lequel la solution aqueuse acide contenant des ions de zinc et des ions d'argent est une solution aqueuse acide contenant :
- ZnSO₄, ZnCl₂, Zn(ClO₄)₂, Zn(NO₃)₂, ZnBr₂, Zn₃(PO₄)₂, ZnO, un sel à base de Zn(OH)₃⁻, un sel à base de Zn(OH)₄²⁻, un sel à base de ZnO₂²⁻, ou un mélange de ceux-ci ; et
- AgCl, AgNO₃, AgClO₃, Ag₂CO₃, Ag₃PO₄, AgClO₄, Ag₂SO₄, AgF, AgNO₂, Ag₂O, AgOH, ou un mélange de ceux-ci.

10. Électrode selon l'une quelconque des revendications 1 à 7 ou 9 ou procédé selon la revendication 8 ou 9, dans lequel l'électrode est soumise en outre à un traitement pour modifier sa conductivité, à un traitement pour modifier son hydrophobicité, à un traitement pour modifier sa ionophilie, ou une combinaison de ceux-ci.

11. Dispositif d'électrolyse comprenant une électrode selon l'une quelconque des revendications 1 à 7 ou la revendication 9 ou 10.

12. Dispositif d'électrolyse selon la revendication 11, couplé à une source d'énergie électrique.

13. Procédé de conversion de dioxyde de carbone (CO₂) en CO comprenant les étapes suivantes :
a) la fourniture d'un dispositif d'électrolyse comprenant une anode et une cathode, dans lequel ladite cathode est une électrode selon l'une quelconque des revendications 1 à 7 ou la revendication 9 ou 10 ;
b) l'exposition de la cathode dudit dispositif d'électrolyse à une composition gazeuse ou liquide contenant du CO₂ ;
c) l'application d'un courant électrique ou d'un potentiel entre l'anode et la cathode afin de réduire le dioxyde de carbone en CO.

14. Procédé selon la revendication 13, dans lequel le procédé est effectué sous une pression de CO₂ de 100 à 100 000 kPa.

15. Procédé selon la revendication 13 ou 14, dans lequel le procédé est effectué à une température de 10 à 100 °C.

16. Procédé selon l'une quelconque des revendications 13 à 15, dans lequel la composition gazeuse ou liquide contenant du CO₂ est une solution aqueuse de catholyte contenant du CO₂ ou une composition gazeuse contenant du CO₂.
